# FASCICULE DE BREVET EUROPEEN

(11) **EP 4 057 972 B1**
(45) Date de publication et mention de la délivrance du brevet: **24.04.2024**
(21) Numéro de dépôt: 20800106.5
(22) Date de dépôt: 29.10.2020
(51) Int. Cl.: A61G 5/04, A61G 5/10, B62K 27/12

(54) **SYSTEME DE LIAISON POUR RELIER UN FAUTEUIL ROULANT A UNE TROTTINETTE DOTEE D'AU MOINS UNE ROUE MOTORISEE**
VERBINDUNGSSYSTEM ZUM VERBINDEN EINES ROLLSTUHLS MIT EINEM SCOOTER, DER MIT MINDESTENS EINEM MOTORISIERTEN RAD VERSEHEN IST
CONNECTION SYSTEM FOR CONNECTING A WHEELCHAIR TO A SCOOTER WHICH IS PROVIDED WITH AT LEAST ONE MOTORISED WHEEL

(30) Priorité: 12.11.2019 FR 1912608
(43) Date de publication de la demande: 21.09.2022
(73) Titulaire: OMNI, 92120 Montrouge (FR)
(72) Inventeur: LHOMMEAU, Robin Terence, 75017 PARIS (FR); RICHARD, Sulivan Boris Christian, 93160 SAINT-MANDE (FR); IZAUTE, Mathieu Adrien, 75020 PARIS (FR)
(74) Mandataire: Cabinet Boettcher
(86) Numéro de dépôt international: PCT/EP2020/080432
(87) Numéro de publication internationale: WO 2021/094100

(56) Documents cités:
- CN-A- 107 343 831
- US-A1- 2008 197 598
- US-A1- 2015 351 979
- US-B1- 9 757 290

## Description

### ARRIERE PLAN DE L'INVENTION

La présente invention se rapporte au domaine des systèmes de liaison pour relier un fauteuil roulant à propulsion manuelle à une trottinette dotée d'au moins une roue motorisée.

Un système de liaison du type précité est présenté dans le document US9757290B1 où l'on voit un fauteuil roulant comprenant une structure tubulaire sur les côtés de laquelle sont fixées les roues du fauteuil et sur laquelle est fixée une assise. Cette structure tubulaire comporte deux montants latéraux avant et une traverse avant reliant ces montants entre eux pour rigidifier la structure tubulaire. Cette traverse avant fait partie intégrante de la structure tubulaire et elle a pour fonction principale de maintenir un écartement fixe entre les montants latéraux avant de la structure.

La trottinette qui est dotée d'une roue motorisée est également équipée d'un dispositif d'attelage définissant une ouverture en forme de U qui est orientée vers le haut afin de recevoir la traverse avant du fauteuil roulant. La traverse avant est bloquée dans l'ouverture en forme de U par un moyen de blocage qui s'oppose à son extraction hors de l'ouverture du dispositif d'attelage.

Ce type de système de liaison n'est compatible qu'avec un type de fauteuil roulant particulier doté d'une structure tubulaire avec traverse avant s'étendant en partie basse des montants latéraux avant.

Un autre système de liaison est présenté dans le document US 2015/351979 A1.

Il serait par conséquent utile de développer un système de liaison compatible avec une large variété de fauteuils roulants à propulsion manuelle.

### OBJET DE L'INVENTION

Un objet de la présente invention est de fournir un système de liaison pour relier un fauteuil roulant à propulsion manuelle à une trottinette dotée d'au moins une roue motorisée, ce système de liaison résolvant au moins certains des problèmes précités de l'art antérieur.

### RESUME DE L'INVENTION

L'invention est exposée dans le jeu de revendications joint.

A cet effet, suivant un premier aspect, l'invention concerne un système de liaison pour relier un fauteuil roulant à propulsion manuelle à une trottinette dotée d'au moins une roue motorisée, où le système comprend :
- une première interface de fixation adaptée pour serrer une surface périphérique externe d'une première partie tubulaire du fauteuil;
- une deuxième interface de fixation adaptée pour serrer une surface périphérique externe d'une deuxième partie tubulaire du fauteuil;
- une structure détachable dotée d'au moins une barre transversale ;
le système de liaison étant agencé pour sélectivement adopter :
- une configuration de liaison dans laquelle la structure détachable est assemblée aux première et deuxième interfaces de fixation pour pouvoir transmettre des efforts entre la barre transversale et ces première et deuxième interfaces de fixation ; et
- une configuration de libération dans laquelle la structure détachable est détachée vis-à-vis de chacune desdites première et deuxième interfaces de fixation.

Le système de liaison selon l'invention peut se fixer de manière amovible sur une grande majorité des fauteuils roulants à propulsion manuelle sans avoir à modifier le fauteuil en lui-même.

Comme les fauteuils comportent une structure tubulaire, on utilise des première et deuxièmes interfaces de fixation pour venir enserrer des surfaces de portions tubulaire du fauteuil et ainsi réaliser des points de fixation solidement arrimés sur la structure tubulaire du fauteuil.

Ces première et deuxième interfaces sont agencées pour pouvoir y attacher de manière amovible une structure détachable dotée d'une barre transversale.

Cette structure détachable est retirée lorsque le passager ne souhaite pas atteler son fauteuil à la trottinette et souhaite simplement l'utiliser en propulsion manuelle sans risque d'être dérangé par la présence de la barre transversale.

Une fois la structure détachable retirée, seules les première et deuxième interfaces de fixation restent montées sur la structure tubulaire.

A contrario, si le passager souhaite atteler son fauteuil à une trottinette, il assujettie alors la structure détachable au fauteuil via les première et deuxième interfaces de fixation qui sont déjà montées / installées à demeure sur la structure tubulaire du fauteuil.

Ce système de liaison permet de maintenir une interface de fixation sur le fauteuil, sans avoir à modifier ce fauteuil.

Le fait d'avoir d'une part des interfaces de fixation fixées sur la structure du fauteuil et d'autre part un ensemble détachable vis-à-vis de ces interfaces de fixation permet de régler puis fixer la position de la barre transversale sur la plupart des fauteuils roulants tout en maintenant les interfaces de fixation dans une position fixe adaptée à la structure du fauteuil.

Ceci facilite grandement l'installation et l'ergonomie du système de liaison.

Par ailleurs, comme la structure détachable n'est pas directement attachée à la structure tubulaire du fauteuil, on limite le risque de dégrader le fauteuil en installant ou retirant la structure détachable.

Enfin, comme on le verra par la suite, comme l'interface de fixation est prévue pour pouvoir rester montée à demeure sur le fauteuil, il n'est pas gênant que les moyens de sa fixation soient difficilement accessibles ou difficilement actionnables par un passager installé sur le fauteuil, la fonction essentielle de ces interfaces de fixation étant plutôt de former une liaison mécanique résistante avec la structure tubulaire du fauteuil.

L'exigence d'ergonomie nécessaire au montage ou au démontage de la structure détachable est apportée par le fait d'avoir une structure détachable compatible avec les première et deuxième interfaces de fixation.

La barre transversale est particulièrement utile puisqu'elle permet d'améliorer la maniabilité du fauteuil attelé via cette barre.

En effet, cette barre permet une éventuelle rotation autour de la barre ce qui peut être nécessaire lors des opérations d'attelage ou lors du pilotage du fauteuil sur un sol non plan.

Par ailleurs, comme la barre est allongée, il est aisé de lui appliquer un couple d'orientation du fauteuil en exerçant d'un côté de la barre une poussée et de l'autre côté de la barre une traction.

La barre permet aussi un usage comme zone d'appui des pieds du passager. On limite ainsi le risque que les pieds ne viennent faire obstacle lors des opérations d'attelage / dételage du fauteuil.

Le système de liaison selon l'invention peut aussi comporter un dispositif d'attelage destiné à être d'un côté attelé de manière amovible avec la barre d'attelage et d'un autre côté assujetti à la trottinette.

Différents modes de réalisation de ce dispositif d'attelage seront détaillés ci-après.

Selon un deuxième aspect, l'invention concerne un véhicule de transport d'un passager comportant :
- un fauteuil roulant à propulsion manuelle pour porter ce passager ;
- un système de liaison selon l'un quelconque des modes de réalisation de l'invention, ladite première interface de fixation serrant une surface périphérique externe d'une première partie tubulaire du fauteuil et ladite deuxième interface de fixation serrant une surface périphérique externe d'une deuxième partie tubulaire du fauteuil, le système de liaison étant placé dans sa configuration de liaison de manière à ce que la structure détachable soit assemblée aux première et deuxième interfaces de fixation pour pouvoir transmettre des efforts de traction du fauteuil via la barre transversale.

Ce véhicule présente les avantages précités associés au système de liaison selon l'invention. Un avantage de ce véhicule est de pouvoir être manoeuvré en exerçant des efforts via la barre transversale qu'il supporte de manière amovible.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

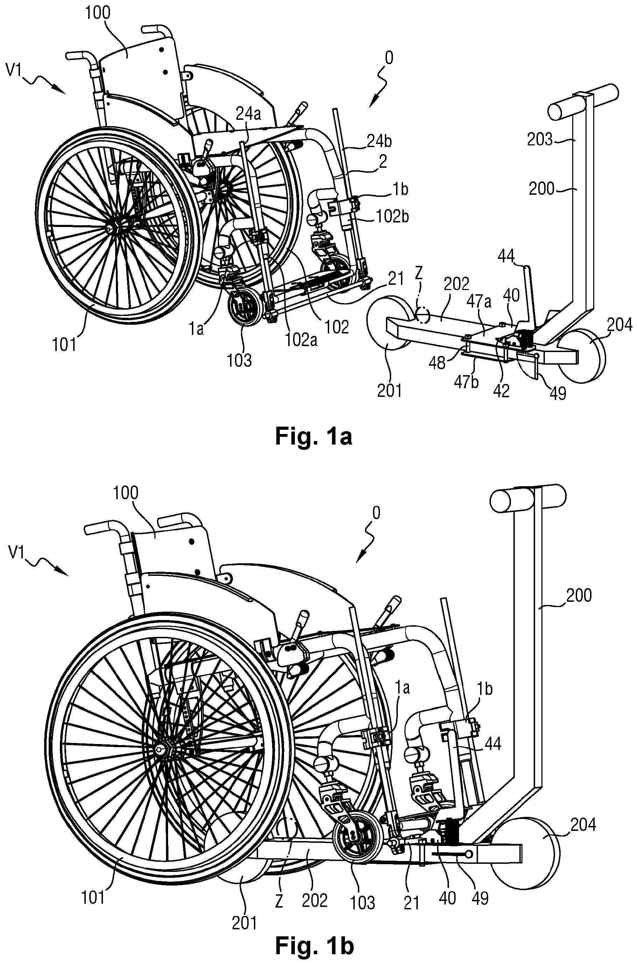

[Fig. 1a] la figure 1a représente un système de liaison 0 selon l'invention comprenant d'une part une interface de fixation 1a, 1b fixée sur une structure d'un fauteuil 100, une structure détachable 2 portée par l'interface de fixation 1a, 1b et d'autre part un dispositif d'attelage 40 porté par une trottinette 200 dotée d'une roue motorisée et d'un plateau, le système de liaison 0 étant ici positionné dans sa configuration dételée ;
[Fig. 1b] la figure 1b représente le système de liaison 0 de la figure 1a selon l'invention alors qu'il est placé dans sa configuration d'attelage dans laquelle la barre transversale 21 de la structure détachable 2 est reliée mécaniquement au dispositif d'attelage 40 qui est porté de manière amovible sur la trottinette 200, dans cette configuration d'attelage, le passager peut facilement manoeuvrer et propulser son fauteuil en utilisant la roue motorisée 201 ;

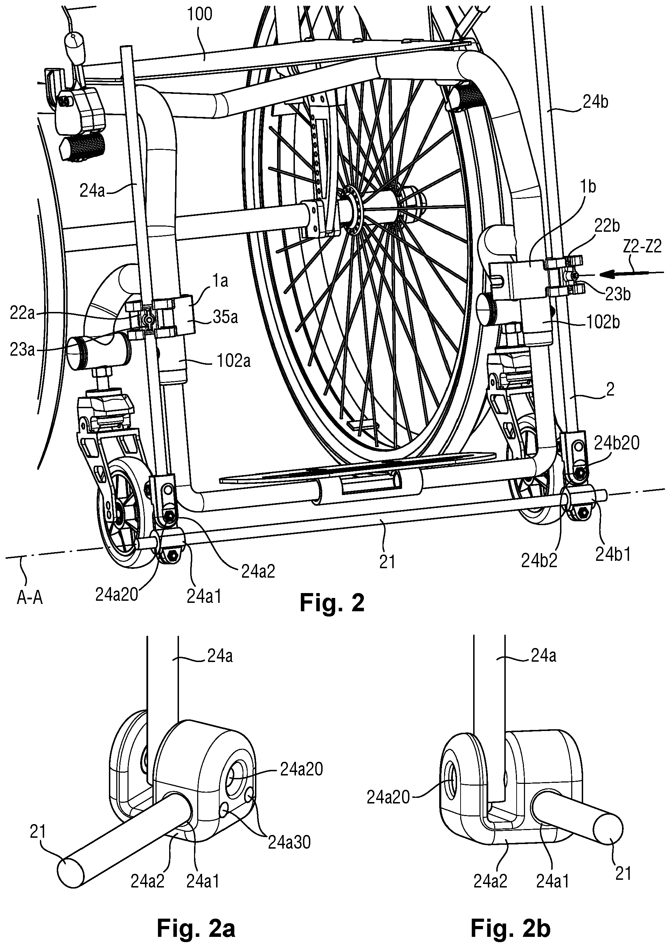

[Fig. 2] la figure 2 représente une vue de détail de l'avant du fauteuil illustré à la figure 1a, on voit ici que la structure détachable 2 est placée en configuration de liaison ce qui signifie que cette structure 2 est attaché aux première et deuxièmes interfaces de fixation 1a, 1b qui sont elles-mêmes fixées sur le fauteuil 100 ;
[Fig. 2a] la figure 2a représente une vue de face d'un premier dispositif d'assemblage 24a2 agencé pour relier la première tige latérale 24a à la barre transversale 21 ;
[Fig. 2b] la figure 2b représente une vue arrière du premier dispositif d'assemblage 24a2 de la figure 2a ;

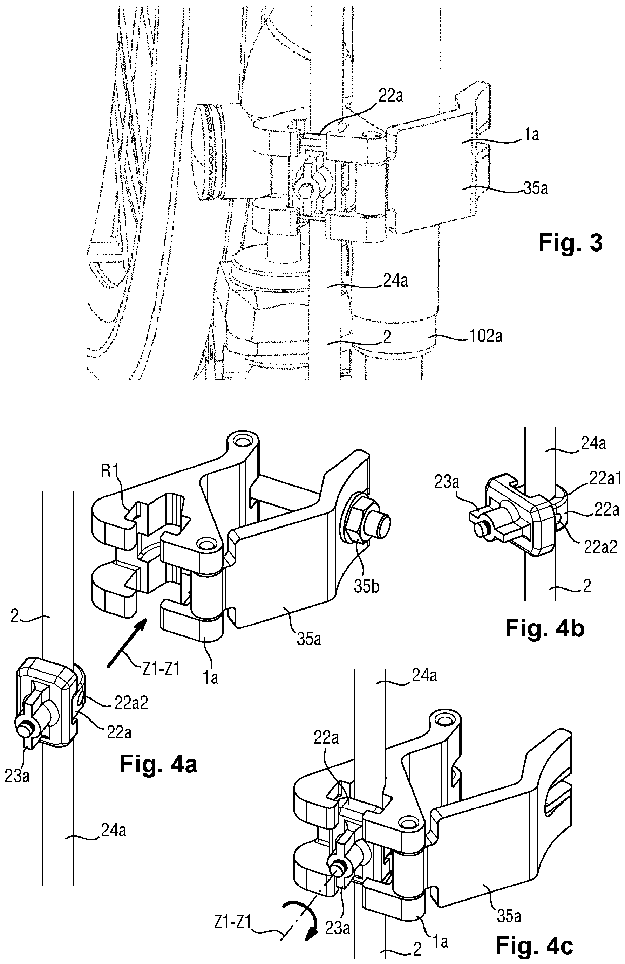

[Fig. 3] la figure 3 est une vue de détail d'une zone de la figure 1a où l'on voit la première interface de fixation 1a assemblée à la structure tubulaire du fauteuil par serrage d'une première partie tubulaire 102a et un premier appareillage de liaison 22a de la structure détachable 2 en configuration de liaison (dans cette configuration de liaison l'appareillage de liaison 22a est fixé / solidarisé a l'interface de fixation 1a) ;
[Fig. 4a] la figure 4a est une vue en perspective de la première interface de fixation 1a et du premier appareillage de liaison 22a placé en configuration de libération, ce premier appareillage de liaison 22a étant en outre assemblé sur une première tige latérale 24a de la structure détachable 2 (en configuration de libération un appareillage de liaison 22a, 22b est libéré vis-à-vis de l'interface de fixation 1a, 1b correspondante) ;
[Fig. 4b] la figure 4b est une vue de détail d'une partie de la structure détachable 2 alors que celle-ci est détachée des interfaces de fixation 1a, 1b ;
[Fig. 4c] la figure 4c est une vue en perspective de la première interface de fixation 1a et du premier appareillage de liaison 22a illustrés à la figure 4a mais le premier appareillage est ici placé en configuration de liaison ;

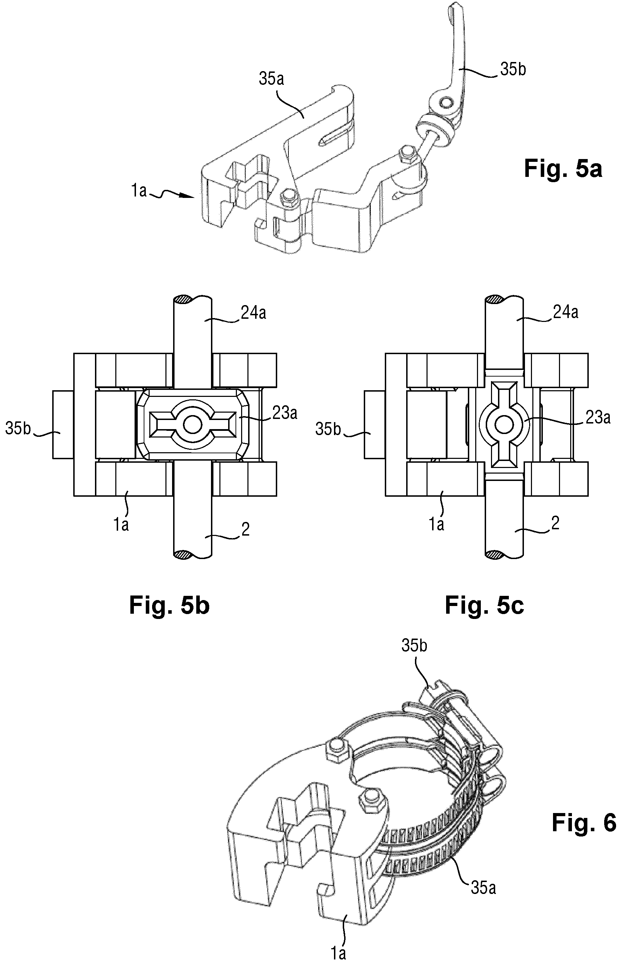

[Fig. 5a] la figure 5a est une vue en perspective de la première interface de fixation 1a seule alors qu'elle est détachée de la structure détachable 2 et du fauteuil 100 ;
[Fig. 5b] la figure 5b est une vue de face de la première interface 1a et du premier appareillage de liaison 22a dont une commande manuelle 23a est dans une position telle que le système de liaison 0 se trouve dans sa configuration de libération pour autoriser l'écartement du premier appareillage de liaison 22a ;
[Fig. 5c] la figure 5c est une vue de face des éléments illustrés à la figure 5b mais ici, le système de liaison 0 se trouve dans sa configuration de liaison dans laquelle la première interface 1a et le premier appareillage de liaison 22a sont solidarisés entre eux ;

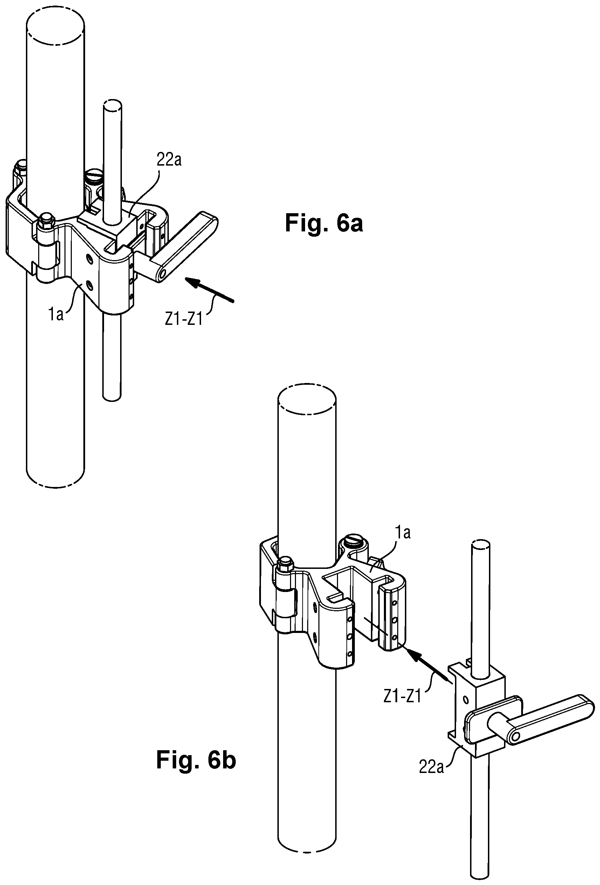

[Fig. 6] la figure 6 est une vue en perspective d'un exemple de première interface de fixation 1a qui comporte d'une part une interface de serrage 35a qui est ici un collier pour serrer un tube de la structure du fauteuil et un élément de contrainte 35b, qui est ici un mécanisme de serrage par liaison vis-écrou pour serrer ce collier ;
[Fig. 6a] la figure 6a est une vue en perspective de face de la première interface 1a et du premier appareillage de liaison 22a dont une commande manuelle 23a est dans une position telle que le système de liaison 0 se trouve dans sa configuration de liaison pour solidariser le premier appareillage de liaison 22a sur la première interface 1a ;
[Fig. 6b] la figure 6b est une vue en perspective de face de la première interface 1a et du premier appareillage de liaison 22a, le système de liaison 0 se trouvant dans sa configuration de libération, le premier appareillage de liaison 22a étant ici écarté de la première interface 1a ;

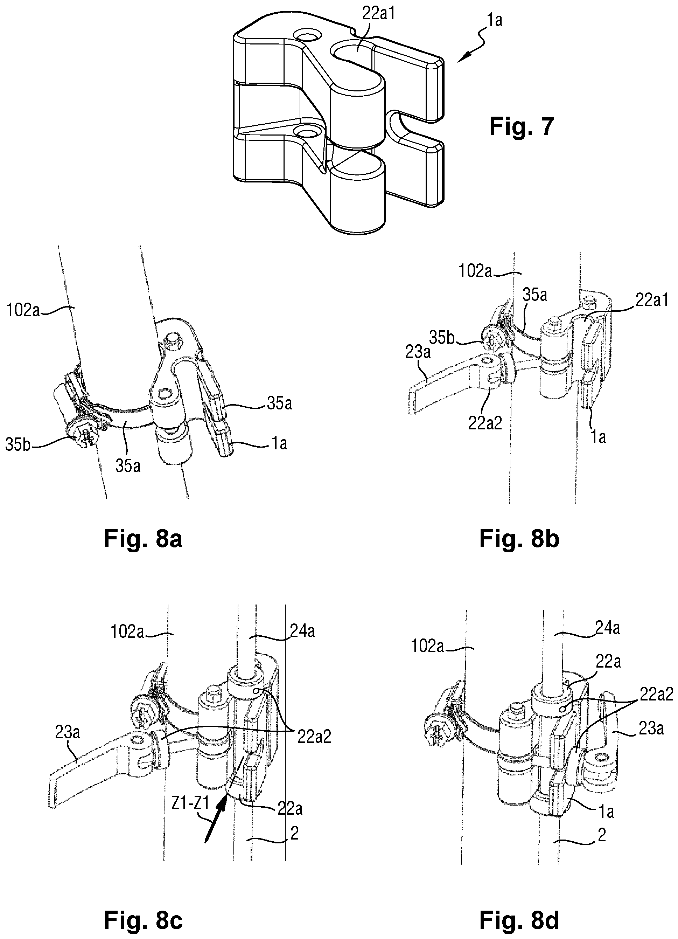

[Fig. 7] la figure 7 est une vue en perspective d'une des pièces constitutives d'une des interfaces de fixation 1a, cette pièce comporte une face en V pour venir en appui contre une partie tubulaire 102a ou 102b du fauteuil afin de se centrer contre cette partie tubulaire, cette pièce comporte aussi une forme en creux destinée à former une glissière de guidage en translation 22a1 d'une des tiges latérales 24a qui correspond à cette interface de fixation donnée ;
[Fig. 8a] la figure 8a illustre une des interfaces de fixation, ici l'interface 1a, fixée à une partie tubulaire du fauteuil qui lui correspond, ici la partie 102a, via un collier de serrage 35a serré par l'élément de contrainte 35b qui est ici de type vis-écrou ;
[Fig. 8b] la figure 8b illustre l'interface de fixation de la figure 8a équipée d'une commande manuelle 23a destinée à commander le serrage sélectif d'une des tiges latérales de structure détachable 2 à l'intérieur d'une glissière 22a1 qui est ici pratiquée dans cette interface de fixation 1a ;
[Fig. 8c] la figure 8c illustre l'interface de fixation 1a de la figure 8b après que l'on ait inséré la tige latérale 24a à l'intérieur de sa glissière 22a1, cette tige latérale 24a est ici pourvue de deux bagues 22a2 formant des butées latérales (moyens de blocage) qui lorsqu'elles viennent buter contre l'interface de fixation correspondante 1a, interdisent le coulissement de la tige latérale 24a le long de la glissière correspondante 22a1, la commande manuelle 23a est ici en position de libération pour autoriser l'écartement de la structure détachable 2 ;
[Fig. 8d] la figure 8d illustre l'interface de fixation 1a et la tige latérale 24a de la figure 8c alors que la commande manuelle 23a se trouve en position de liaison, le système de liaison étant ainsi en configuration de liaison dans laquelle l'appareillage de liaison 22a de la structure détachable 2 est solidarisé au fauteuil via l'interface de fixation 1a ;

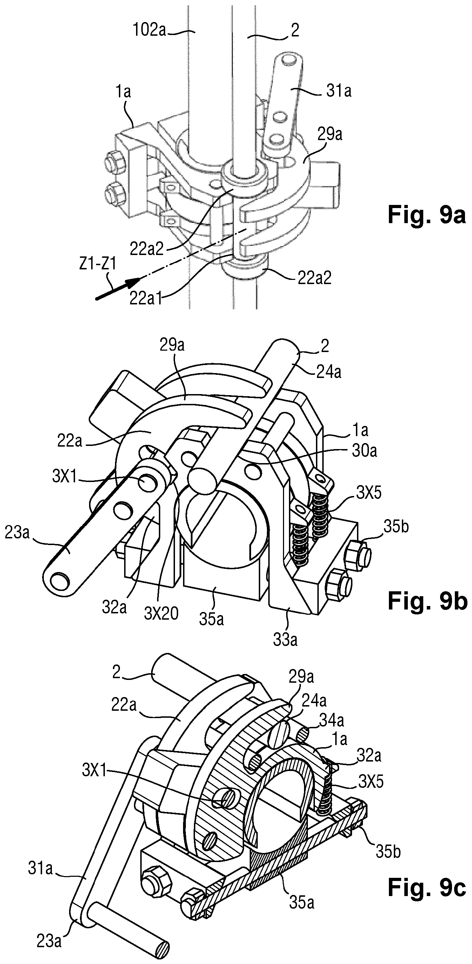

[Fig. 9a] la figure 9a illustre un autre mode de réalisation possible d'une interface de fixation 1a dotée de crochets 29a pour sélectivement maintenir une tige latérale 24a bloquée dans une encoche de réception 30a de cette interface de fixation 1a lorsque le système de liaison 0 est en configuration de liaison ;
[Fig. 9b] la figure 9b représente une autre vue en perspective de l'interface de fixation 1a illustrée sur la figure 9a, la tige 24a étant bloquée sur cette interface de fixation 1a par le crochet 29a placé en position de serrage ;
[Fig. 9c] la figure 9c représente une vue en coupe transversale de l'interface de fixation 1a de la figure 9b où l'on voit que le premier crochet, en position de serrage de la tige 24a, est verrouillé dans cette position par un pêne 3X1 porté par la commande manuelle 23a ;

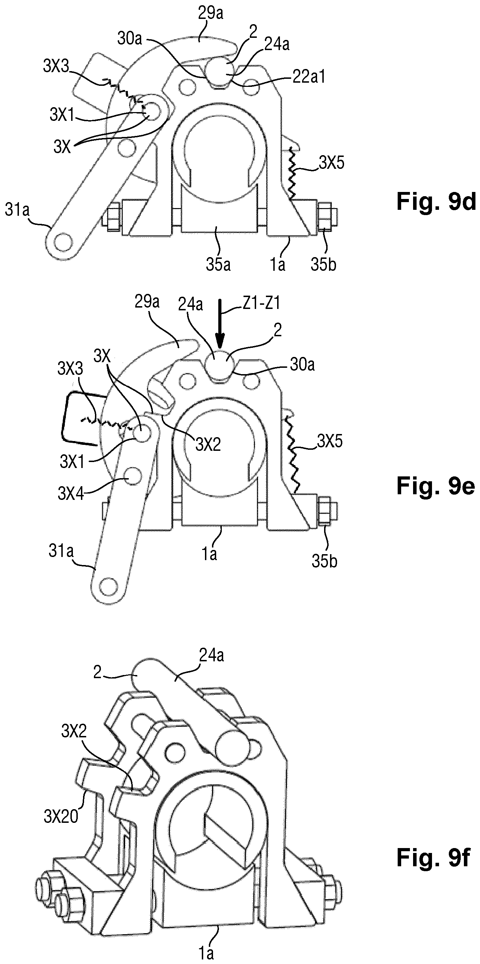

[Fig. 9d] la figure 9d représente une vue de face de l'interface de fixation 1a de la figure 9c dans laquelle le crochet 29a est toujours dans sa position de serrage de la tige 24a ;
[Fig. 9e] la figure 9e représente une vue de face de l'interface de fixation 1a de la figure 9c dans laquelle le crochet 29a est maintenant placé dans sa position de dégagement de la tige 24a, cette tige 24a pouvant être écartée de la première interface de fixation 1a ;
[Fig. 9f] la figure 9f est une vue en perspective d'une partie de l'interface de fixation 1a illustrée aux figures 9a à 9e, cette figure montrant une encoches 3X20 utilisée pour servir de butée d'appui du pêne 3X1 lorsque le crochet 29a se trouve en position de dégagement et qu'aucune action manuelle n'est exercée sur l'actionneur manuel 31a ;

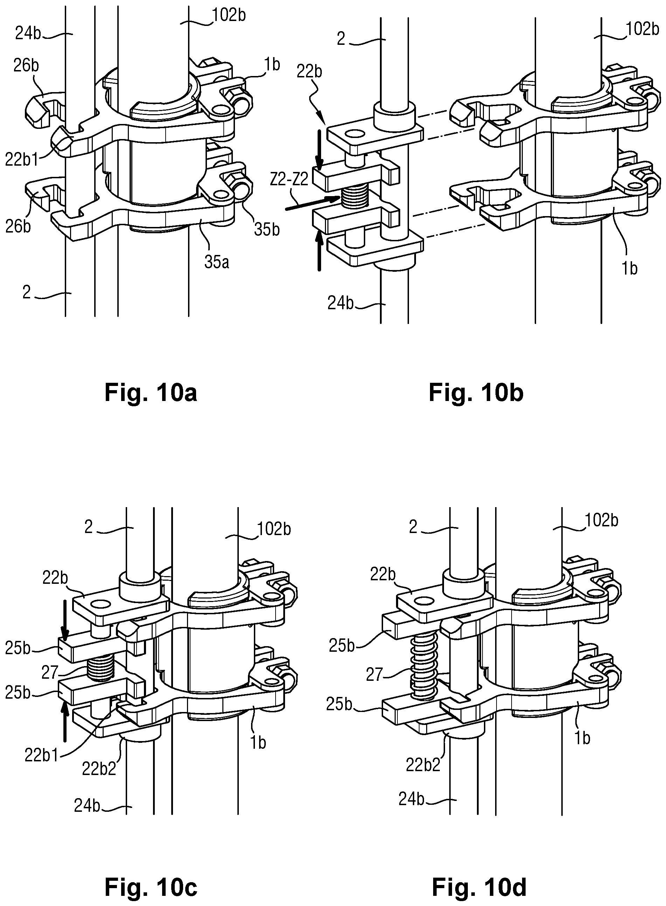

[Fig. 10a] la figure 10a illustre une interface de fixation, en l'occurrence la deuxième interface 1b dans un mode de réalisation particulier où elle comporte deux mâchoires mobiles l'une par rapport à l'autre pour former une interface de serrage 35a d'une partie tubulaire du fauteuil, ici la partie tubulaire 102b, des éléments de contrainte 35b de type vis/écrou forçant le serrage de la partie tubulaire par l'interface de serrage 35a, cette interface de fixation 1b étant dotée de gâches 26b destinées à permettre le verrouillage de la tige latérale 24b dans un première glissière de guidage 22b1 formée dans l'interface de fixation 1b ;
[Fig. 10b] la figure 10b est une vue de l'interface de fixation 1b de la figure 10a et de l'une des tiges latérales 24b de la structure détachable 2 sur laquelle est fixée un appareillage de liaison 22b, cet appareillage de liaison 22b est ici en position de libération pour autoriser l'éloignement de l'interface de liaison 1b ;
[Fig. 10c] la figure 10c représente les éléments de la figure 10b, l'appareillage de liaison 22b est toujours en position de libération mais il est ici inséré dans la glissière 22b1 formée dans l'interface de fixation 1b ;
[Fig. 10d] la figure 10d illustre l'interface de fixation 1b des figures 10a à 10c et l'appareillage de liaison 22b qui lui correspond placé dans sa position de liaison où il fixe la structure détachable 2 sur cette interface de fixation 1b ;

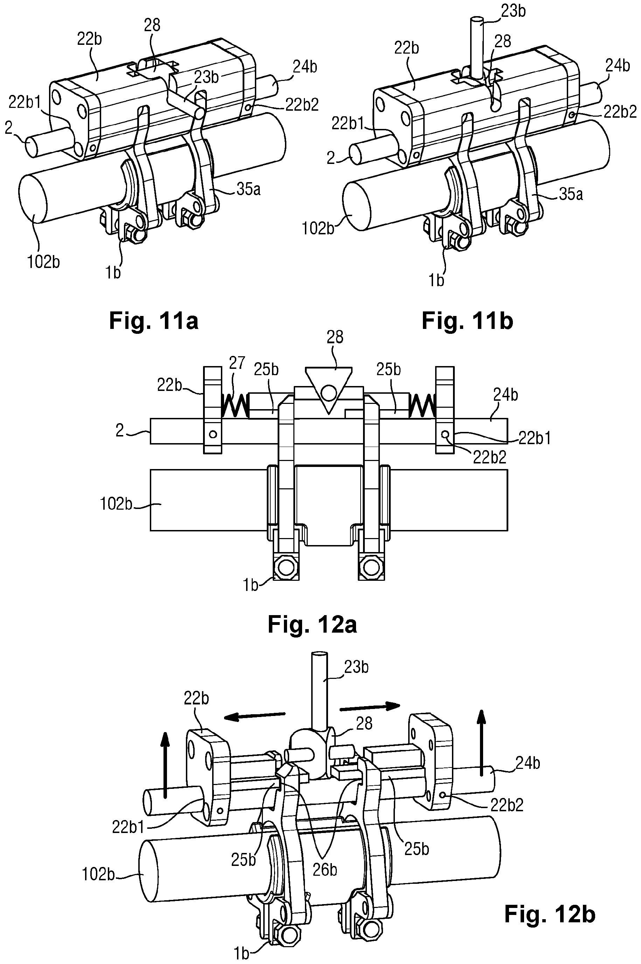

[Fig. 11a] la figure 11a illustre une vue en perspective d'une interface de fixation 1b et un appareillage de liaison 22b dans sa position de liaison où il est assemblé / fixé sur l'interface de fixation 1b, l'interface de fixation 1b est ici fixée sur une partie tubulaire 102b du fauteuil et une tige latérale 24b de la structure détachable 2 est ici portée par l'appareillage de liaison 22b de manière à ce que la structure détachable 2 et la structure du fauteuil soient liées mécaniquement entre elles via l'interface de fixation et l'appareillage de liaison 22b ;
[Fig. 11b] la figure 11b illustre l'ensemble des éléments de la figure 11a mais ici, la commande manuelle 23b est positionnée pour que l'appareillage de liaison 22b soit en position de libération, la structure détachable pouvant ainsi être écartée du fauteuil ;
[Fig. 12a] la figure 12a est une vue de l'interface de fixation 1a et de l'appareillage de liaison 22b présentés à la figure 11a en position de liaison, mais ici un carter de protection est retiré pour montrer des pênes et gâches 25b, 26b du système de liaison de l'invention et une came 28 utilisée pour déplacer les pênes par rapport aux gâches ainsi définir la configuration de liaison ou en configuration de libération ;
[Fig. 12b] la figure 12b est une vue de l'interface de fixation 1a et de l'appareillage de liaison 22b présentés à la figure 11b, sans le carter, l'appareillage de liaison 22b étant placé en position de libération sous l'effet du positionnement particulier de la came 28 par la commande manuelle 23b ;

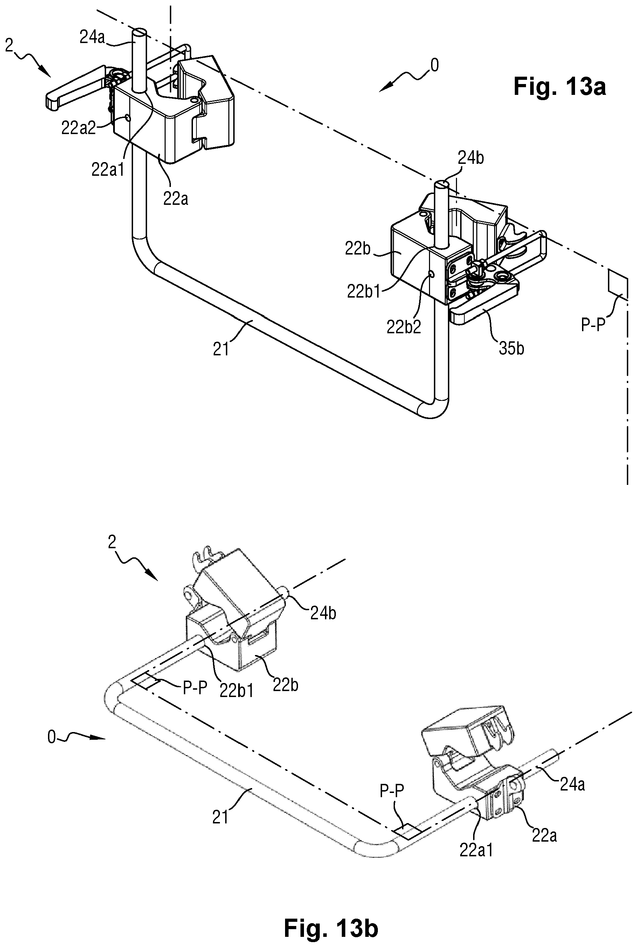

[Fig. 13a] la figure 13a est une vue en perspective d'un autre mode de réalisation d'une partie du système de liaison 0 selon l'invention, dans ce mode de réalisation chacune des interface de fixation 1a, 1b comporte des mâchoires articulées l'une par rapport à l'autre, chaque paire de mâchoires donnée est prévue pour serrer une surface tubulaire de la structure du fauteuil sous l'effet d'une grenouillère (non représentée) portée par cette paire de mâchoires donnée, la structure détachable 2 est ici formée par une tige conformée en U sur sa longueur et passant dans des glissières 22a1 et 22b1 formées dans les première et deuxième interfaces de fixation 1a, 1b ;
[Fig. 13b] la figure 13b est une vue en perspective de dessous des éléments présentés à la figure 13a où l'on voit que les glissières 22b1 et 22a1 s'étendent parallèlement entre elles dans un plan principal d'extension P-P où se trouvent les tiges latérales 24a, 24b de la structure détachable 2, cette structure détachable pouvant ainsi coulisser par rapport aux interfaces de fixation 1a, 1b implantées sur le fauteuil 100 ;

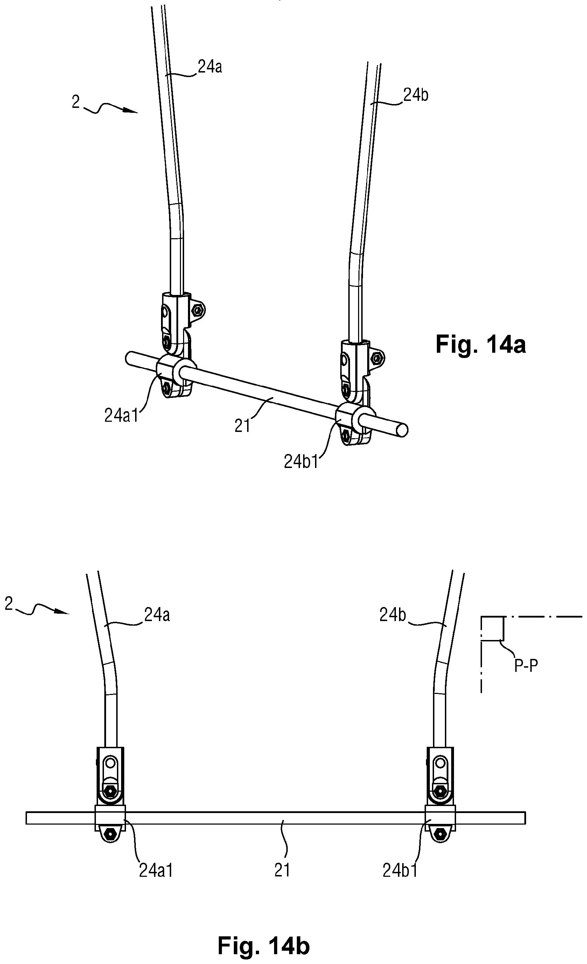

[Fig. 14a] la figure 14a est une vue en perspective d'un mode de réalisation de la structure détachable 2 selon l'invention dans lequel structure 2 comporte des premier et second coulisseaux 24a1, 24b1 pouvant coulisser le long de la barre transversale 21 pour régler un écartement des tiges latérales 24a et 24b, on note que ces tiges latérales peuvent être rectilignes ou éventuellement tordues pour régler un déport de la tige transversale 21 par rapport au fauteuil ;
[Fig. 14b] la figure 14b est une vue de face de la structure détachable2 de la figure 14a ;

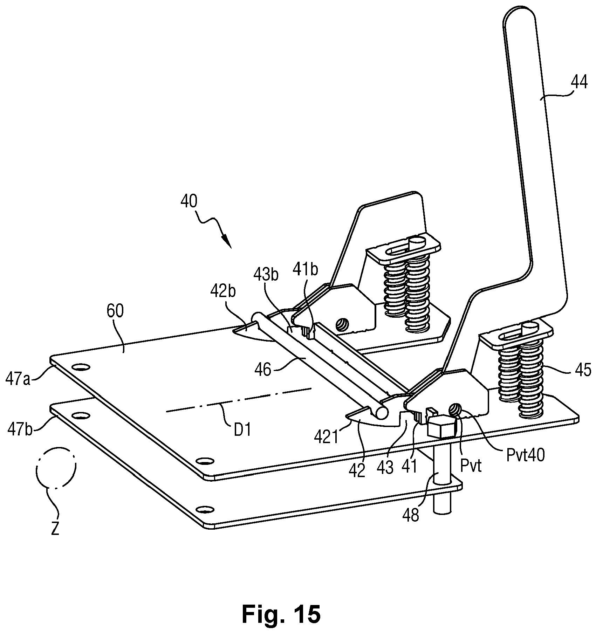

[Fig. 15] la figure 15 présente une vue en perspective d'un premier mode de réalisation d'un dispositif d'attelage 40 du système de liaison selon l'invention, ce dispositif d'attelage 40 étant prévu pour être fixé sur une trottinette et pour pouvoir s'atteler sur une barre transversale 21, dans ce premier mode de réalisation simplifié, un organe de manoeuvre 44 (ici un levier pivotant autour d'un pivot Pvt40) est solidaire d'une paire de crochets 42, 42b qui se déplacent ensemble avec l'organe de manoeuvre 44 pour sélectivement atteler ou dételer la barre transversale vis-à-vis du dispositif d'attelage 40 (ici le pivot Pvt40 de levier est confondu avec le pivot des crochets Pvt vis-à-vis d'une bride 47a) ;

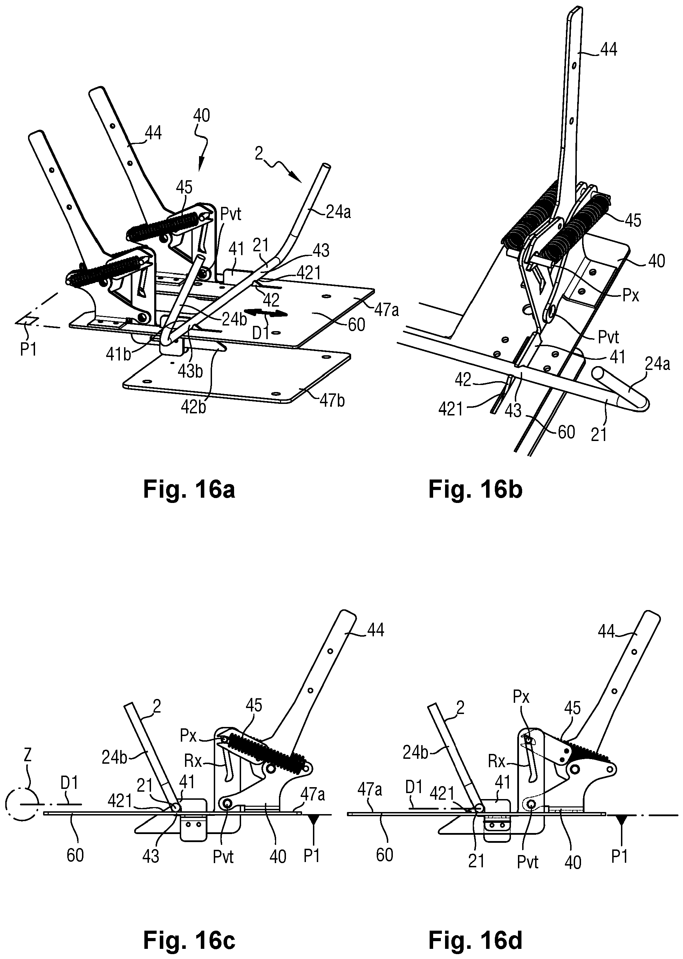

[Fig. 16a] la figure 16a présente un deuxième mode de réalisation d'un dispositif d'attelage 40 du système de liaison selon l'invention, et une structure détachable 2 dont la barre transversale 21 est attelée au dispositif d'attelage 40, dans ce deuxième mode de réalisation les crochets 42, 42b sont en partie placés sous un plan d'appui supérieur P1 destiné à venir en appui contre une face supérieure d'un plateau de trottinette lorsque ce dispositif d'attelage 40 est assemblé sur cette trottinette ;
[Fig. 16b] la figure 16b présente une vue d'un détail des éléments illustrés sur la figure 16a où l'on voit que le couplage entre un organe de manoeuvre 44 et un crochet donné se fait via une pièce intermédiaire Px, en l'occurrence un pion Px, guidée dans une rainure Rx, entre plusieurs positions de la pièce intermédiaire Px de telle manière que pour certaines positions de la pièce intermédiaire ont ait un couplage mécanique entre l'organe de manoeuvre 44 et les crochets 42, 42b via la pièce intermédiaire Px ou au contraire un découplage mécanique entre les crochets 42, 42b et l'organe de manoeuvre 44, le couplage mécanique étant utile pour déplacer les crochets 42, 42b par actionnement de l'organe de manoeuvre 44 et le découplage mécanique étant utile lorsque les crochets 42, 42b sont en prise avec la barre transversale 21 ce qui permet de privilégier les efforts appliqués sur la barre transversale 21 par les crochets ;
[Fig. 16c] la figure 16c présente une vue de côté du dispositif d'attelage 40 illustré aux figures 16a et 16b et de la structure détachable 2 qui sont ici attelés ;
[Fig. 16d] la figure 16d présente le dispositif d'attelage 40 et la structure d'attelage 2 des figures 16a, 16b, 16c dans un plan de coupe transversale à la barre transversale 21, cette figure 16c montrant une partie du système de liaison 0 alors qu'il se trouve dans une configuration d'attelage, c'est-à-dire une configuration dans laquelle la barre transversale 21 est maintenue dans des premier et second espaces de réception 43, 43b respectivement délimités par les crochets 42, 42b et des butées 41, 41b, ces espaces de réception 43, 43b sont ici conformés pour interdire la sortie de la barre transversale 21 ;

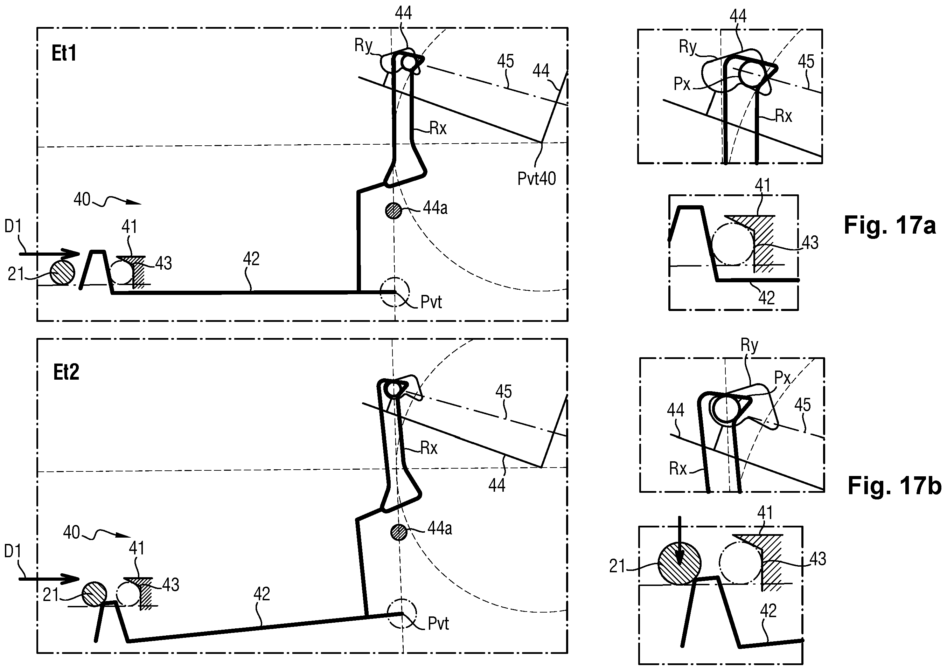

[Fig. 17a] la figure 17a montre une vue schématique du dispositif d'attelage 40 selon l'invention dans son mode de réalisation illustré aux figures 16a à 16d, cette figure 17a comporte deux zones de détails du dispositif d'attelage 40 observé à un premier instant Et1 où la barre transversale 21 est dételée et éloignée du premier crochet 42 et de l'espace de réception 43, un ressort 45 exerçant un effort de rappel sur la pièce intermédiaire Px qui appui simultanément contre la rainure Rx formée dans le crochet 42 et contre le rebord Ry de l'évidement formé dans l'organe de manoeuvre 44, le premier crochet 42 est ainsi forcé vers une position de butée stable dans laquelle il referme le premier espace 43 destiné à recevoir la barre transversale 21 (la barre transversale 21 est ici éloignée du crochet 42 et le crochet 42 est dans une position stable dans laquelle le premier espace de réception est refermé) ;
[Fig. 17b] la figure 17b montre les éléments de la figure 17a observés à un deuxième instant Et2 où la barre transversale 21 est rapprochée du premier espace 43 et en appui glissant contre une surface d'actionnement 421 du crochet 42 pour déplacer ce crochet 42 vers sa deuxième position où il libère une ouverture de passage de la barre transversale vers le premier espace 43, à cet instant Et2 la pièce Px est en appui contre la rainure Rx tout en restant à l'écart du rebord Ry de l'évidement formé dans l'organe de manoeuvre 44, l'organe de manoeuvre 44 est ici mécaniquement découplé vis-à-vis du crochet 42 et il est resté immobile de l'instant Et1 à l'instant Et2, seul le crochet 42 étant ici mobilisé par la barre transversale 21 ;

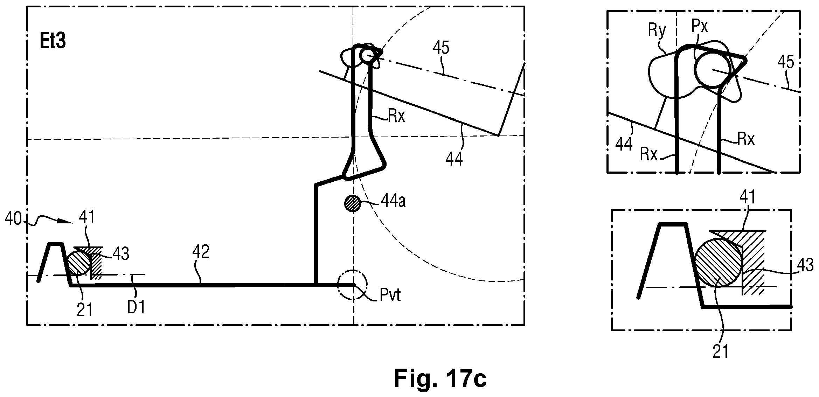

[Fig. 17c] la figure 17c montre les éléments de la figure 17a observés à un troisième instant Et3 où la barre transversale 21 se trouve dans le premier espace 43 coincée entre la butée 41 et le premier crochet 42 qui est alors dans sa première position, nous sommes ici dans la configuration d'attelage et la pièce Px qui est toujours contrainte élastiquement par le ressort 45 est ici en appui sur la seule rainure Rx du crochet tout en étant à l'écart du rebord Ry de l'évidement formé dans l'organe de manoeuvre 44 (dans cette configuration d'attelage, l'organe de manoeuvre est mécaniquement découplé vis-à-vis des crochets 42 pour ainsi maximiser les efforts de rappel élastique appliqués sur les crochet 42), le basculement du crochet 42 au-delà de cette première position n'est plus possible car le crochet 42 force contre la barre transversale 21 qui est elle-même en butée contre la première butée 41, cette configuration est stable et des efforts importants peuvent être transmis entre le dispositif d'attelage 40 et la barre transversale 21 ;

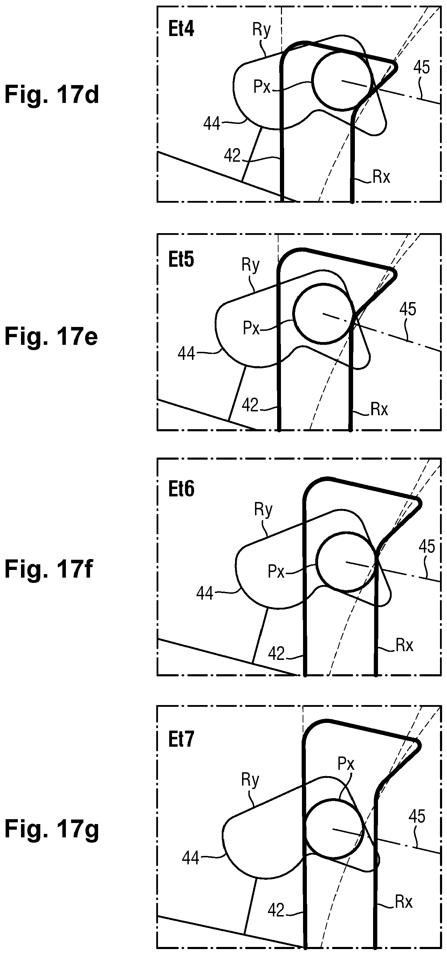

[Fig. 17d] la figure 17d montre une zone de détail des éléments de la figure 17a observés à un quatrième instant Et4 où la barre transversale 21 se trouve toujours dans le premier espace 43 coincée entre la butée et le premier crochet 42 qui est toujours dans sa première position, nous sommes ici à un instant Et4 où l'organe de manoeuvre 44 est déplacé pour manoeuvrer le premier crochet 42 de sa première position vers sa deuxième position, à cet instant Et4 le rebord Ry de l'évidement vient en contact contre la pièce Px pour d'une part générer un effort à l'encontre de l'organe de rappel 45 et d'autre part déplacer la pièce Px par glissement continu le long de la rainure Rx, cette pièce Px se rapprochant progressivement d'un axe de pivot Pvt du premier crochet 42 par rapport à la bride 47 ; ce glissement progressif permet d'augmenter la force élastique s'exerçant sur l'organe de manoeuvre tout en assurant le maintien du crochet 42 dans sa première position de maintien du crochet 42 dans le premier espace 43 (on évite ainsi une manoeuvre involontaire du crochet) ;
[Fig. 17e] la figure 17e montre une zone de détail des éléments de la figure 17a observés à un cinquième instant Et5 où la barre transversale 21 se trouve toujours dans le premier espace 43 coincée entre la butée 41 et le premier crochet 42 en première position, la pièce Px est ici dans un équilibre instable puisqu'elle est d'un côté en appui ponctuel contre le crochet 42, en l'occurrence dans sa rainure Rx, et d'un autre côté, en appui ponctuel sur l'organe de manoeuvre 44, en l'occurrence sur le rebord Ry ;
[Fig. 17f] la figure 17f montre une zone de détail des éléments de la figure 17a observés à un sixième instant Et6 où la barre transversale 21 se trouve toujours dans le premier espace 43 coincée entre la butée 41 et le premier crochet 42 qui est toujours dans sa première position, la pièce Px est ici dans un équilibre stable puisqu'elle est d'un côté en appui ponctuel contre le crochet 42, en l'occurrence dans sa rainure Rx, et d'un autre côté, en double appui ponctuel sur l'organe de manoeuvre 44, en l'occurrence en deux points éloignés du rebord Ry ;
[Fig. 17g] la figure 17g montre une zone de détail des éléments de la figure 17a observés à un septième instant Et7 où la barre transversale 21 se trouve toujours dans le premier espace 43 coincée entre la butée 41 et le premier crochet 42 qui est toujours dans sa première position, la pièce Px est ici en double appui ponctuel sur l'organe de manoeuvre 44 et en appui contre un côté de la rainure Rx du crochet orienté de manière que le déplacement de la pièce Rx en direction de ce côté de la rainure Rx force le déplacement du crochet 42 de sa première vers sa deuxième position pour libérer la barre transversale 21 suivant une direction perpendiculaire à la barre 21 ;

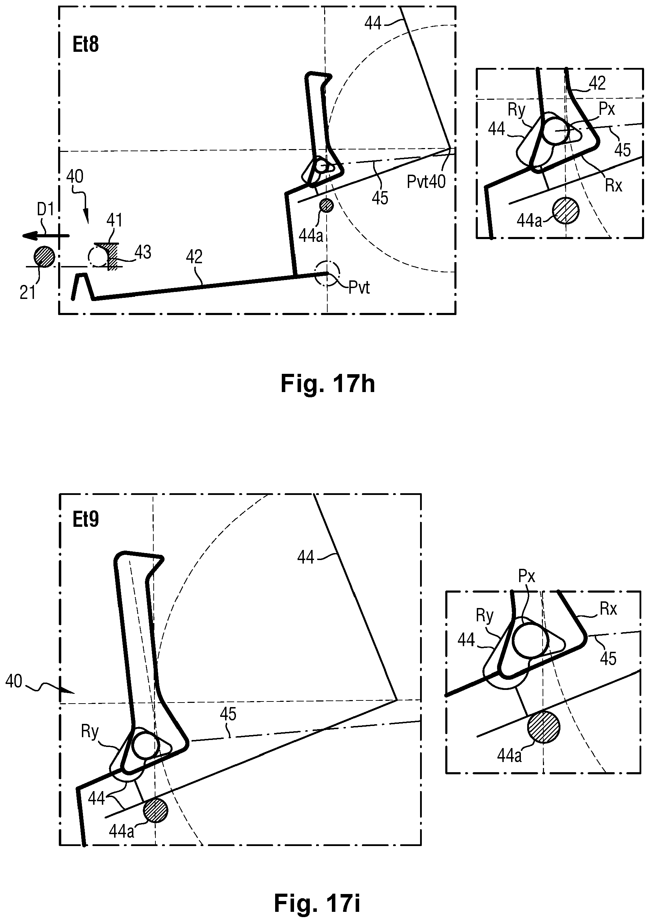

[Fig. 17h] la figure 17h montre une zone de détail des éléments de la figure 17a observés à un huitième instant Et8 dans lequel la pièce Px est poussée sous l'effet d'efforts exercés par l'organe de manoeuvre pour forcer contre ledit côté de la rainure Rx tout en déplaçant le crochet 42 de sa première vers sa deuxième position, la pièce Px glissant le long de ce côté de la rainure vers une extrémité terminale de cette rainure Rx (à cet instant Et8, le crochet 42 n'est plus contraint élastiquement et il peut pivoter autour de son axe de pivot Pvt dans la limite d'un jeu existant entre la rainure Rx et la pièce Px, ici le crochet 42 est dans sa deuxième position et la barre transversale 21 est libérée) ;
[Fig. 17i] la figure 17i montre une zone de détail des éléments de la figure 17a observés à un neuvième instant Et9 dans lequel l'organe de manoeuvre 44 est en butée contre un arrêt de fin de course 44a de l'organe de manoeuvre 45, un jeu entre la rainure Rx et la pièce Px permet au crochet 42 de pivoter librement autour de son axe de pivot Pvt dans la limite de ce jeu, ici le crochet 42 est toujours dans sa deuxième position et la barre transversale 21 est toujours libérée du premier espace ; l'organe de rappel élastique 45, l'arrêt de fin de course 44a et l'organe de manoeuvre 44 sont positionnés pour que lorsque l'organe de manoeuvre est en butée contre l'arrêt de fin de course 44a, l'organe de rappel élastique 45 force l'organe de manoeuvre 44 contre cet arrêt de fin de course 44a pour le maintenir dans cette position stable ;

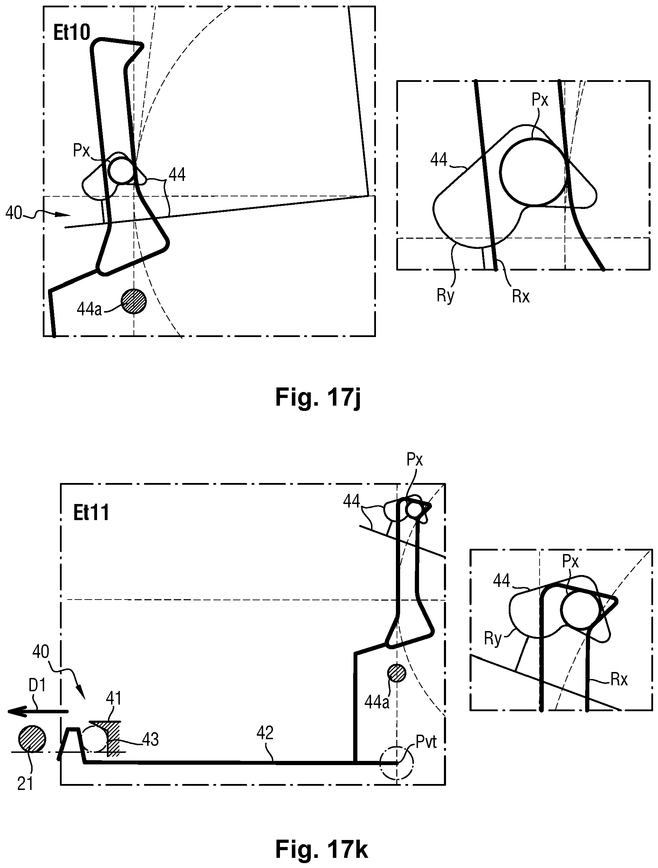

[Fig. 17j] la figure 17j montre une zone de détail des éléments de la figure 17a observés à un dixième instant Et10 dans lequel la pièce Px est toujours contrainte élastiquement par l'organe de rappel élastique 45 mais l'organe de manoeuvre 44 est déplacé de manière à forcer le crochet de sa deuxième position vers sa première position, la pièce Px étant ainsi en contact contre le côté de la rainure Rx vers lequel cette pièce Px est contrainte élastiquement par l'organe de rappel 45, ainsi, l'organe de rappel élastique 45 recommence à contraindre élastiquement le premier crochet 42 vers sa première position ;
[Fig. 17k] la figure 17k montre une zone de détail des éléments de la figure 17a observés à un onzième instant Et11 (de la succession d'instants Et1 à Et11) dans lequel le dispositif d'attelage 40 se retrouve exactement dans l'état où il se trouvait à l'instant Et1, le crochet étant à nouveau dans sa position stable où il referme le premier espace de réception 43, la barre transversale 21 étant hors de cet espace 43 ;

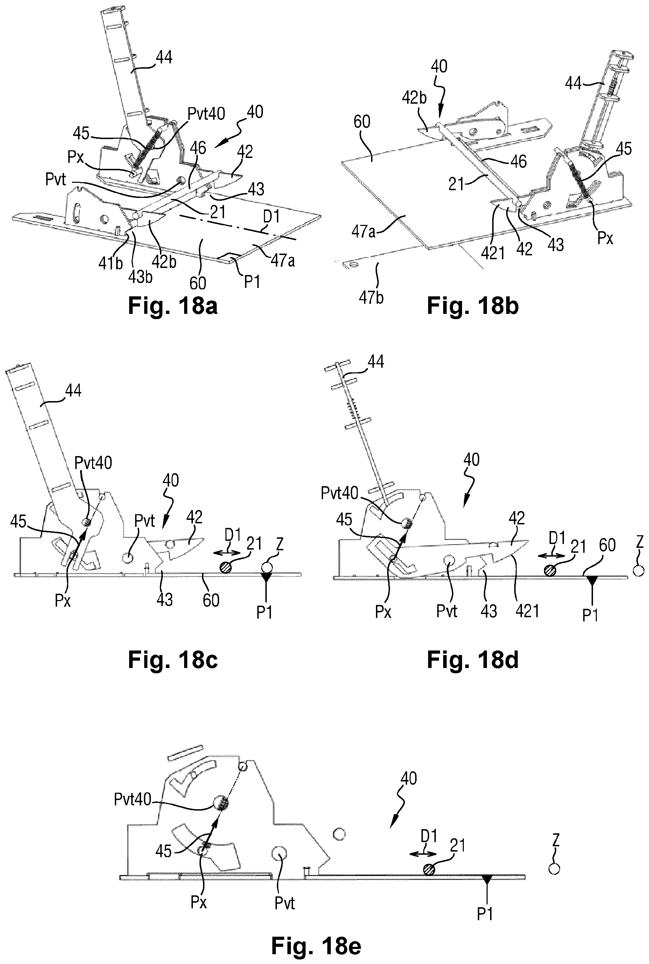

[Fig. 18a] la figure 18a montre une vue en perspective d'un autre mode de réalisation du dispositif d'attelage 40 selon l'invention dans lequel on a toujours des crochets 42, 42b montés pivotants par rapport à un axe de pivot Pvt fixé sur la bride 47a, entre leur première et deuxième positions, dans ce mode de réalisation les crochets font face à des butées 41, 41b pour définir les premier et second espaces de réception 43, 43b destinés à recevoir une barre transversale 21, dans ce mode les crochets 42, 42b et les butées 41, 41b sont placées exclusivement d'un même côté d'un plan d'appui supérieur P1 défini par une pluralité de points d'appui supérieurs de la première bride 47a contre le plateau de trottinette ;
[Fig. 18b] la figure 18b illustre le dispositif d'attelage 40 de la figure 18a selon une autre perspective ;
[Fig. 18c] la figure 18c illustre le dispositif d'attelage 40 de la figure 18a en vue de côté alors que la barre 21 glisse le long de la première surface de guidage 60 ;
[Fig. 18d] la figure 18d illustre le dispositif d'attelage 40 de la figure 18a en coupe transversale ;
[Fig. 18e] la figure 18e illustre le dispositif d'attelage 40 de la figure 11a en coupe transversale dans un plan de coupe parallèle à celui utilisé pour la figure 18d.

### DESCRIPTION DETAILLEE DE L'INVENTION

Les figures 1a et 1b illustrent un fauteuil roulant 100 à entraînement manuel, une trottinette 200 à roue motorisée 201 et un système de liaison 0 selon l'invention équipant ce fauteuil et la trottinette.

La fonction principale de ce système de liaison est de permettre d'atteler / dételer le fauteuil à la trottinette afin de passer simplement d'un mode de propulsion manuelle à un mode de propulsion motorisée du fauteuil.

Comme on le comprend des figures 1a et 1b, la trottinette 200 comporte au moins une roue avant 204, au moins une roue arrière 201 et un plateau 202 s'étendant entre ces roues avant et arrière.

La roue 201 est ici motorisée via un moteur électrique qui est préférentiellement intégré à la roue.

La trottinette 200 comporte aussi des moyens d'alimentation électrique du moteur pour entraîner cette roue à rotation et ainsi déplacer la trottinette par roulement de la roue motorisée 201 sur le sol.

La roue motorisée 201 est ici la roue arrière, mais il pourrait également s'agir de la roue avant.

La roue avant est ici une roue directionnelle orientable par un guidon 203 monté pivotant par rapport au plateau 202.

L'une au moins de ces roues avant et arrière peut être équipée d'un frein commandé via une commande de frein actionnable par l'utilisateur / le passager.

Le fauteuil 100 comporte au moins trois roues 101, 102, 103 montées à rotation autour d'axes de roulement de ces roues.

Ces roues 101, 102, 103 définissent ensemble un polygone de sustentation du fauteuil 100.

Le fauteuil comporte une zone d'assise située au-dessus du polygone de sustentation. Au moins deux des roues 101, 102 du fauteuil sont à entrainement manuel et au moins une des roues du fauteuil, en l'occurrence les deux roues avant 103, est une roue directionnelle librement orientable pour diriger le fauteuil.

Comme mentionné précédemment, un premier aspect de l'invention porte sur un système de liaison 0 pour relier le fauteuil roulant à propulsion manuelle 100 à une trottinette 200 dotée d'au moins une roue motorisée 201.

Ce système 0 comprend :
- une première interface de fixation 1a adaptée pour serrer une surface périphérique externe d'une première partie tubulaire du fauteuil 102a ;
- une deuxième interface de fixation 1b adaptée pour serrer une surface périphérique externe d'une deuxième partie tubulaire 102b du fauteuil;
- une structure détachable 2 dotée d'au moins une barre transversale 21.

Le système de liaison 0 est agencé pour sélectivement adopter :
- une configuration de liaison (illustrée aux figures 1a, 1b, 2, 3, 8d, 9a, 10d, 11a) dans laquelle la structure détachable 2 est assemblée aux première et deuxième interfaces de fixation 1a, 1b pour pouvoir transmettre des efforts entre la barre transversale 21 et ces première et deuxième interfaces de fixation 1a, 1b ; et
- une configuration de libération (illustrée aux figures 4a, 5b, 8c, 9e, 10b) dans laquelle la structure détachable 2 est détachée vis-à-vis de chacune desdites première et deuxième interfaces de fixation 1a, 1b.

Grâce à l'invention, les deux liaisons mécaniques entre les première et deuxième interfaces de fixation 1a, 1b et les surfaces périphériques externes des première et deuxième parties tubulaire 102a, 102b du fauteuil 100, sont simultanées et éloignées l'une de l'autre de manière à permettre une transmission de couple entre le système de liaison 0 et le fauteuil roulant 100.

Les première et deuxième interfaces de fixation 1a, 1b sont agencées pour être amovibles vis-à-vis des première et deuxième parties tubulaires du fauteuil 102a, 102b de manière à pouvoir équiper / déséquiper le fauteuil sans modifier sa structure.

L'invention est particulièrement avantageuse car elle est adaptée à une grande variété de fauteuils qui ont des structures tubulaires et car elle peut simplement passer :
- d'une configuration de liaison principalement adoptée lorsque l'on veut tracter le fauteuil par transmission d'efforts via la barre transversale 21 ; à
- une configuration de libération principalement adoptée lorsque l'on souhaite propulser le fauteuil manuellement, sans être encombré par la présence de la barre transversale 21.

Il est à noter que l'on passe facilement d'une configuration à l'autre car les première et deuxième interfaces 1a, 1b qui sont préassemblées sur le fauteuil peuvent y rester à demeure, seule la structure détachable étant retirée entre la configuration de liaison et la configuration de libération.

Lorsque le système de liaison 0 est en configuration de liaison (voir les figures 1a, 1b et2), la barre transversale 21 est positionnée à plus grande proximité de ladite au moins une roue directionnelle 103 du fauteuil que des roues 101 à entrainement manuel.

L'orientation du fauteuil par traction sur la barre transversale 21 est ainsi grandement facilité.

Comme on le comprendra de la description relative aux figures 1a, 1b, 15, 16a à 16d, 17a à 17k et 18a à 18e, le système de liaison 0 selon l'invention peut aussi comporter un dispositif d'attelage 40 destiné à s'atteler sur la barre transversale 21 qui appartient ici à la structure détachable 2.

Ce dispositif d'attelage 40 est adapté à être assemblé, préférentiellement de manière amovible, sur la trottinette 200 (par exemple par serrage d'au moins une partie de cette trottinette, comme son plateau 202 ou une zone de support du guidon 203).

Ce dispositif d'attelage 40 comporte un mécanisme d'attelage qui comprend une première butée 41 et un premier crochet 42 qui définissent ensemble un premier espace de réception 43 entre cette première butée 41 et ce premier crochet 42.

Ce premier crochet 42 est mobile par rapport à cette première butée 41 entre une première position et une deuxième position :
- dans sa première position, le premier espace de réception 43 est conformé pour recevoir la barre transversale 21 dans ce premier espace 43 et pour interdire la sortie de cette barre transversale 21 hors de ce premier espace de réception 43 (ce premier espace de réception 43 est tel que lorsque la barre transversale 21 est reçue dans ce premier espace 43 elle est alors serrée par le premier crochet 42 contre la première butée 41 et elle y est ainsi maintenue calée de part et d'autre) ; et
- dans sa deuxième position, le premier espace de réception 43 présente une ouverture orientée pour pouvoir librement déplacer ladite barre transversale 21 entre ce premier espace de réception 43 et une zone externe à ce premier espace de réception 43 (ici, l'ouverture est orientée vers une direction parallèle au plateau 200).

Ce déplacement libre se fait préférentiellement par translation de la barre transversale 21 suivant une direction de translation parallèle audit plateau 202.

Comme illustré par les figures 1a, 1b, 15, 16a, 16b, 16c, 16d et 17a à 18e, la barre transversale 21 comporte préférentiellement une section cylindrique telle que lorsqu'elle est reçue dans le premier espace 43 et que le crochet 42 est dans sa première position, cette barre 21 peut pivoter par rapport au dispositif d'attelage 40 autour d'un axe de symétrie longitudinale A-A.

Ceci est particulièrement avantageux pour permettre une orientation de la trottinette 200 par rapport au fauteuil 100 afin que la roue directionnelle 204 et les roues arrière 101, 102 du fauteuil et de la trottinette 201 soient simultanément en contact sur le sol et cela même si ce sol n'est pas plan.

Préférentiellement, cette barre transversale 21 et le dispositif d'attelage 40 sont agencés pour que lorsque cette barre 21 est reçue dans le premier espace 43 alors que le crochet 42 est dans sa première position, la barre transversale 21 soit alors :
- d'une part interdite de translation par rapport au dispositif d'attelage 40 y compris le long de l'axe de symétrie longitudinale A-A de cette barre transversale 21 ; et
- d'autre part interdite de rotation par rapport au dispositif d'attelage 40 autour d'axes perpendiculaires à l'axe de symétrie longitudinale A-A.

Ce dispositif d'attelage 40 est agencé de manière que lorsqu'il est assemblé sur la trottinette 200, le premier espace 43 est alors à plus grande proximité de ladite au moins une roue directionnelle 204 de la trottinette que de toute autre roue de la trottinette 200.

Ainsi, lorsque le fauteuil est attelé à la trottinette, chaque roue directionnelle 103 du fauteuil se trouve à plus grande proximité de ladite roue directionnelle 204 de la trottinette que de toute autre roue de la trottinette.

L'orientation du fauteuil est ainsi facilitée.

Comme illustré aux figures 1a, 1b et 2, le système de liaison 0 peut aussi comporter des premier et deuxième appareillages de liaison 22a, 22b reliés entre eux via la barre transversale 21.

Le premier appareillage de liaison 22a est mobile, par déplacement d'une première commande manuelle 23a, entre :
- une position de liaison (illustrée par exemple par les figures 3, 4c, 5c, 8d, 9a, à 9d, 10d, 11a13a, 13b) dans laquelle le premier appareillage de liaison 22a solidarise la structure détachable 2 sur la première interface de fixation 1a (cette position de liaison du premier appareillage de liaison 22a est adoptée lorsque le système de liaison 0 est dans sa configuration de liaison) ; et
- une position de libération (illustrée par exemple par les figures 4a, 5b, 8c, 9e, 10b, 11b) dans laquelle le premier appareillage de liaison 22a autorise l'écartement de la structure détachable 2 vis-à-vis de ladite première interface de fixation 1a (cette position de libération du premier appareillage de liaison 22a est adoptée lorsque le système de liaison 0 est dans sa configuration de libération).

De manière similaire, le deuxième appareillage de liaison 22b est mobile, par déplacement d'une deuxième commande manuelle 23b distincte de ladite première commande manuelle 23a, entre :
- une position de liaison dans laquelle ce deuxième appareillage de liaison 22b fixe la structure détachable 2 sur ladite deuxième interface de fixation 1b (cette position de liaison du deuxième appareillage de liaison 22b est adoptée lorsque le système de liaison 0 est dans sa configuration de liaison) ; et
- une position de libération dans laquelle le deuxième appareillage de liaison 22b autorise l'écartement de la structure détachable 2 vis-à-vis de ladite deuxième interface de fixation 1b (cette position de libération du deuxième appareillage de liaison 22b est adoptée lorsque le système de liaison 0 est dans sa configuration de libération).

L'usage de commande(s) manuelle(s) 23a pour sélectivement lier ou libérer la structure détachable vis-à-vis des interfaces de fixation est particulièrement utile car l'utilisateur peut monter ou démonter la structure détachable 2 vis-à-vis du fauteuil sans nécessité d'un outillage particulier.

Dans un mode de réalisation (illustré sur les figures 8b et 8d, 9a à 9e, 13a, 13b), le premier appareillage de liaison 22a peut être porté par la première interface de fixation 1a et rester solidaire de cette première interface de fixation 1a y compris lorsque ce premier appareillage de liaison 22a est dans sa position de libération.

De manière similaire, comme illustré sur les figures 8b et 8d, 9a à 9e, 13a, 13b, le deuxième appareillage de liaison 22b peut être porté par la deuxième interface de fixation 1b et rester solidaires de cette deuxième interface de fixation 1b y compris lorsque ce deuxième appareillage de liaison 22b est dans sa position de libération.

Alternativement au mode de réalisation précédent, comme illustré aux figures 1a, 1b, 2, 3, 4a, 4b, 4c à 6, 10b à 10det 11a à 12b, les premier et deuxième appareillages de liaison 22a, 22b peuvent être portés par la structure détachable 2 et rester solidaires de cette structure détachable 2 y compris lorsque ces premier et deuxième appareillages de liaison sont dans leurs positions de libération respectives.

Il est également possible que les premier et deuxièmes appareillages de liaison 22a, 22b soient en parie portés par les interfaces de fixation et en partie portés par la structure détachable.

Dans un mode de réalisation préférentiel, la structure détachable 2 comporte des première et seconde tiges latérales 24a, 24b.

Préférentiellement, au moins des portions de longueur de ces première et seconde tiges latérales 24a, 24b s'étendent longitudinalement dans des plans perpendiculaires à un axe longitudinal A-A de ladite barre transversale 21.

Préférentiellement, les première et deuxième interfaces de fixation (1a, 1b), et la structure détachable sont conformés pour que lorsque le système de liaison (0) est en configuration de liaison :
- d'une part ladite première tige latérale (24a) s'étend en longueur le long d'un axe longitudinal de passage de la première partie tubulaire du fauteuil (102a) à l'intérieur de la première interface de fixation (1a) ; et
- d'autre part ladite seconde tige latérale (24b) s'étend en longueur le long d'un axe longitudinal de passage de la deuxième partie tubulaire du fauteuil (102b) à l'intérieur de la deuxième interface de fixation (1b).

De cette manière, lorsque le système de liaison 0 est dans sa configuration de liaison, la barre transversale 21 peut être placée entre un plan de sol et un plan parallèle au plan de sol passant par une extrémité inférieure des première et deuxième parties tubulaires du fauteuil.

Comme illustré sur les figures 1a, 1b, 2, 3, 4a à 4c, 11a à 12b, 13a, 13b :
- d'une part, le premier appareillage de liaison 22a comporte une première glissière de guidage 22a1 en translation de la première tige latérale 24a par rapport à ce premier appareillage de liaison 22a et un premier moyen de blocage 22a2 mobile entre une position de blocage dans laquelle il immobilise la première tige 24a par rapport à la première glissière de guidage 22a1 et une position de réglage dans laquelle il autorise la translation de la première tige latérale 24a par rapport à la première glissière de guidage 22a1 ; et
- d'autre part, le deuxième appareillage de liaison 22b comporte une deuxième glissière de guidage 22b1 en translation de la seconde tige latérale 24b par rapport à ce deuxième appareillage de liaison 22b et un second moyen de blocage 22b2 mobile entre une position de blocage dans laquelle il immobilise la seconde tige latérale 24b par rapport à la deuxième glissière de guidage 22b1 et une position de réglage dans laquelle il autorise la translation de la seconde tige latérale 24b par rapport à la deuxième glissière de guidage 22b1.

Un exemple de moyen de blocage utilisé pour sélectivement immobiliser une tige latérale 24a, 24b en interdisant son coulissement peut être une simple vis comme sur les figures 4a, 4b, 11a à 12b, 13a à 13b qui est vissée dans l'appareillage de liaison 22a, 22b pour déboucher dans un passage servant de glissière à la tige latérale.

Bien entendu, on pourrait prévoir d'autres moyens de blocage pour sélectivement bloquer la tige en coulissement et ainsi permettre le réglage en hauteur de la structure amovible.

Un autre exemple de moyen de blocage 22a2, 22b2 est un collier ou plusieurs colliers pour enserrer la tige 24a, 24b sous l'effet d'une vis comme sur les figures 8c et 8d et ainsi interdire le coulissement de la tige 24a, 24b par rapport à l'appareillage 22a, 22b correspondant.

Il est aussi possible, comme sur les modes de réalisation illustrés aux figures 8a et 8b que la glissière de guidage 22a1 soit non pas formée sur l'appareillage de liaison correspondant 22a, 22b mais au contraire sur l'interface de fixation correspondante 1a, 1b.

Chacune de ces solutions de réalisation des glissières de guidage peut être combinée avec n'importe laquelle des solutions précitées de réalisation des moyens de guidage.

Ces moyens de guidage peuvent appartenir à une interface de fixation 1a, 1b fixe sur le fauteuil (comme sur les figures 8a à 8d et 9a à 9f, 10a à 10d) ou ils peuvent appartenir à l'appareillage de liaison 22a, 22b qui fait partie de la structure détachable 2 (comme sur les figures 1a à 6 et 11a à 12b, 13a, 13b).

Comme illustré sur les figures 13a, 13b, les première et seconde tiges latérales 24a, 24b présentent chacune des portions de longueurs qui s'étendent longitudinalement dans un même plan principal P-P d'extension de ces première et seconde tiges latérales.

Ce plan principal P-P passe par des premier et second axes de guidage en translation des tiges latérales respectivement définis par les première et deuxième glissières 22a1, 22b1 de manière à ce que ces première et seconde tiges latérales 24a, 24b puissent coulisser ensemble par rapport à ces première et deuxième glissières 22a1, 22b1 par translation suivant une direction de translation radiale de la barre transversale 21.

Comme on le comprend de la figure 1b, le réglage de la hauteur de la barre transversale 21 par rapport au fauteuil 100 permet de définir la position du fauteuil 100 par rapport au sol une fois que ce fauteuil 100 est attelé à la trottinette via la barre transversale 21.

Ainsi, la position de la zone d'assise et l'écart entre les roues directionnelles 103 du fauteuil et le sol peuvent être facilement réglés.

Comme illustré sur les exemples des figures 1a, 1b, 2, 3, 4a, 4b, 8c, 9a,10d 11a à 12b, 13a, le premier appareillage de liaison 22a est porté par ladite première tige latérale 24a et est agencé pour adopter une position fixe par rapport à cette première tige latérale 24a.

Cette position fixe du premier appareillage de liaison 22a est préférentiellement sélectionnée parmi une pluralité de positions fixes prédéfinies du premier appareillage de liaison 22a.

De manière similaire, le deuxième appareillage de liaison 22b est porté par ladite seconde tige latérale 24b et est agencé pour adopter une position fixe par rapport à cette seconde tige latérale 24b.

Cette position fixe du deuxième appareillage de liaison 22b est préférentiellement sélectionnée parmi une pluralité de positions fixes prédéfinies du deuxième appareillage de liaison 22b.

Comme on le comprend en particulier des figures 2 et 14a, 14b, la structure détachable 2 est articulée pour être déformable entre une forme déployée pour son utilisation et une forme repliée pour son rangement.

Dans sa forme déployée, la structure détachable 2 est en forme de U, lesdites première et seconde tiges latérales 24a, 24b s'étendent alors longitudinalement dans lesdits plans perpendiculaires à l'axe longitudinal A-A de ladite barre transversale.

Dans sa forme repliée, d'une part la première tige latérale 24a présente un axe longitudinal s'étendant globalement à plus grande proximité de l'axe longitudinal A-A de la barre transversale que dans la forme déployée de la structure détachable, et d'autre part la seconde tige latérale 24b présente un axe longitudinal s'étendant globalement à plus grande proximité de l'axe longitudinal A-A de la barre transversale que dans la forme déployée de la structure détachable. L'axe A-A doit être compris comme étant une direction d'extension de la barre transversale 21, les tiges latérales 24a, 24b étant rapprochées de cette direction lorsque la structure détachable est dans sa configuration repliée.

Ainsi, en configuration repliée les tiges latérales 24a, 24b sont respectivement pivotées par rapport à la barre transversale 21 pour être rapprochées de l'axe A-A, ces tiges latérales 24a, 24b étant soit rapprochées l'une de l'autre soit écartées l'une de l'autre.

A cette fin, comme illustré sur les figures 2 et 14a, 14b, la première tige latérale 24a peut être reliée à la barre transversale 21 via une première articulation 24a20 (par exemple un premier pivot ou une première rotule) et la seconde tige latérale 24b peut être reliée à la barre transversale 21 via une seconde articulation 24b20 (par exemple un second pivot ou une seconde rotule), ces première et seconde articulations 24a20, 24b20 appartenant à la structure détachable 2.

Idéalement les première et seconde articulations permettent des orientations des tiges latérales 24a, 24b par rapport à la tige transversale 21 autour de premier et second axes d'orientation respectifs qui sont parallèles entre eux. Cette orientation est particulièrement pratique car elle facilite l'orientation des tiges latérales 24a, 24b par rapport aux interfaces de fixations 1a, 1b qui doivent les supporter.

Afin de permettre cette orientation des tiges latérales 24a, 24b par rapport à la tige transversale 21, la structure détachable 2 comporte préférentiellement :
- un premier dispositif d'assemblage 24a2 (illustré sur les figures 2a, 2b) agencé pour relier la première tige latérale 24a à la barre transversale 21 ; et
- un deuxième dispositif d'assemblage 24b2 (non illustré car fonctionnellement identique au premier dispositif d'assemblage 24a2) agencé pour relier la seconde tige latérale 24b à la barre transversale 21.

Le premier dispositif d'assemblage 24a2 (illustré sur les figures 2a, 2b) comporte la première articulation 24a20 (ici un premier pivot traversant la première tige latérale 24a) pour permettre l'orientation de la première tige latérale 24a par rapport à la barre transversale 21.

Le deuxième dispositif d'assemblage 24b2 comporte la seconde articulation 24b20 (ici un second pivot traversant la seconde tige latérale 24b) pour permettre l'orientation de la seconde tige latérale 24b par rapport à la barre transversale 21.

Il est aussi possible, comme illustré par les figures 2, 14a et 14b que la structure détachable 2 comporte des moyens de réglage d'une distance d'écartement entre une zone de liaison de cette structure détachable 2 avec la première interface de fixation 1a et une zone de liaison de cette structure détachable 2 avec la deuxième interface de fixation 1b.

Ces moyens de réglage de la distance d'écartement adoptent sélectivement une configuration bloquée dans laquelle ladite distance d'écartement est fixée et une configuration de réglage dans laquelle cette distance d'écartement est variable.

Ces moyens de réglage de distance d'écartement comportent des premier et second coulisseaux 24a1, 24b1 agencés pour coulisser à distance l'un de l'autre le long de la barre transversale 2.

Préférentiellement, le premier dispositif d'assemblage 24a2 (illustré sur les figures 2a, 2b) comporte le premier coulisseau 24a1 et des vis de pression 24a30 pour sélectivement immobiliser par serrage la barre transversale 21 à l'intérieur du premier coulisseau 24a1.

Le premier dispositif d'assemblage 24a2 forme préférentiellement un étrier, la première tige latérale 24a étant montée pivotante, en chape par rapport à ce premier dispositif d'assemblage 24a2. Ce montage en chappe est particulièrement résistant et il permet de rapprocher la première articulation 24a20 vis-à-vis de la barre transversale 21 ce qui consolide la liaison entre la première tige latérale 24a et la barre transversale 21.

Préférentiellement, ce montage en chape est tel qu'il permet une orientation sur au moins 150° de la première tige latérale 24a par rapport à la barre transversale 21.

Préférentiellement, le deuxième dispositif d'assemblage 24b2 (similaire au premier dispositif d'assemblage 24a2 illustré sur les figures 2a, 2b) comporte le second coulisseau 24b1 et des vis de pression pour sélectivement immobiliser par serrage la barre transversale 21 à l'intérieur du second coulisseau 24b1.

Ce deuxième dispositif d'assemblage 24b2 forme préférentiellement un étrier, la seconde tige latérale 24b étant montée pivotante, en chape par rapport à ce deuxième dispositif d'assemblage 24b2. Ce montage en chappe consolide la liaison entre la seconde tige latérale 24b et la barre transversale 21.

Préférentiellement, ce montage en chape est tel qu'il permet une orientation sur au moins 150° de la seconde tige latérale 24b par rapport à la barre transversale 21.Ces premier et deuxième dispositifs d'assemblage 24a2, 24b2 forment des noix articulées compactes et particulièrement résistantes.

Il est à noter que ces moyens de réglage de distance d'écartement pourraient être des moyens de réglage de longueur de la barre transversale, cette barre transversale 21 étant par exemple une barre télescopique.

Comme illustré par exemple dans le mode de réalisation illustré aux figures 1a à 12b, il est aussi possible que le deuxième appareillage de liaison 22b comporte au moins une deuxième paire de pênes 25b complémentaire d'une deuxième paire de gâches 26b appartenant à la deuxième interface de fixation 1b.

Les pênes de cette deuxième paire de pênes 25b sont contraints élastiquement vers une position d'assemblage de ces pênes dans les gâches de la deuxième paire de gâches 26b.

De manière similaire, le premier appareillage de liaison 22a peut aussi comporter au moins une première paire de pênes complémentaire d'une première paire de gâches appartenant à la première interface de fixation 1a.

Les pênes de cette première paire de pênes sont contraints élastiquement vers une position d'assemblage de ces pênes dans les gâches de la première paire de gâches.

Le système de liaison 0 est dans sa configuration de liaison lorsque ces premier et deuxième appareillages de liaison 22a, 22b sont dans leurs positions d'assemblage respectives.

Chacun de ces premier et deuxième appareillages de liaison 22a, 22b comporte au moins un ressort 27 qui est agencé pour contraindre élastiquement les pênes de la paire de pênes 25b correspondante vers la position d'assemblage.

Suivant le mode de réalisation illustré aux figures 10a à 10d, on voit un appareillage de liaison 22b, ici le deuxième appareillage de liaison 22b, qui comporte une paire de pênes 25b complémentaires d'une paire de gâches 26b.

Ces pênes de la paire de pênes 25b sont montés coulissants suivant un axe de coulissement pour être forcés à s'engager dans les gâches 26b complémentaires de cette paire de pênes 25b.

L'actionnement des pênes peut se faire manuellement comme sur les figures 10b à 10d ou alternativement à l'aide de différents mécanismes.

Pour cela, comme illustré sur les figures 11a à 12b, le premier appareillage de liaison 22a peut comporter une came 28 de déplacement des pênes de ladite première paire de pênes vers la position d'assemblage de ces pênes dans les gâches de la première paire de gâches.

De manière similaire, le deuxième appareillage de liaison 22b peut aussi comporter une came de déplacement des pênes de ladite deuxième paire de pênes vers la position d'assemblage de ces pênes dans les gâches de la deuxième paire de gâches.

Comme illustré sur les figures 9a à 9e, la première interface de fixation 1a peut comporter au moins un premier crochet 29a mobile entre :
- une position de dégagement dans laquelle ce premier crochet 29a libère un passage vers une première encoche 30a de réception d'une première partie de la structure détachable 2 (Cette première encoche 30a est formée dans la première interface de fixation 1a) ; et
- une position de serrage dans laquelle ce premier crochet 29a serre ladite première partie de la structure détachable 2 à l'intérieur de la première encoche de réception 30a, la structure détachable 2 étant alors immobilisée dans cette première encoche 30a.

Préférentiellement, pour chaque mode de réalisation d'une interface de fixation 1a ou 1b présenté, on fait en sorte que la première interface de fixation 1a soit fonctionnellement identique à la deuxième interface de fixation 1b.

Ainsi, on peut faire en sorte que la deuxième interface de fixation 1b comporte au moins un deuxième crochet mobile entre :
- une position de dégagement dans laquelle ce deuxième crochet libère un passage vers une deuxième encoche de réception d'une deuxième partie de la structure détachable, cette deuxième encoche étant formée dans la deuxième interface de fixation ; et
- une position de serrage dans laquelle ce deuxième crochet serre ladite deuxième partie de la structure détachable à l'intérieur de la deuxième encoche de réception, la structure détachable étant alors immobilisée dans cette deuxième encoche.

Toujours en référence au mode de réalisation illustré sur les figures 9a à 9e, la première interface de fixation 1a peut aussi comporter un actionneur manuel 31a agencé pour déplacer ledit premier crochet 29a entre sa position de dégagement et sa position de serrage.

Typiquement cet actionneur manuel 31a est un premier levier.

Dans ce mode de réalisation, la première interface 1a peut aussi comporter un premier verrou 3X pour interdire le déplacement du premier crochet 29a de sa position de serrage vers sa position de dégagement.

Ce premier verrou 3X comprend un pêne 3X1 porté par le premier levier 31a et une gâche 3X2 solidaire de la pièce 33a dans laquelle est formée la première encoche 30a.

Ce pêne 3X1 du premier verrou 3X est déplacé vers la gâche 3X2 du premier verrou 3X par action d'un premier ressort de rappel 3X3 agissant sur le premier levier 31a.

Le premier levier 31a est porté par le premier crochet 29a sur lequel il est directement articulé via une liaison pivot 3X4.

Le premier crochet 29a est relié à un ressort de rappel en position 3X5 de ce premier crochet 29a de sa position de dégagement vers sa position de serrage.

Le premier crochet 29a appartient à une pièce de guidage à rotation 32a (visible à la figure 9c) présentant une surface de guidage en arc de cercle complémentaire d'une surface de guidage complémentaire formée sur la pièce 33a de la première interface de fixation 1a présentant ladite première encoche 30a.

La pièce de guidage à rotation 32a est coincée entre la surface de guidage complémentaire et des piges 34a placées de part et d'autre de la première encoche 30a.

Toujours en référence aux figures 9a à 9f, la première interface de fixation 1a présente une encoche supplémentaire 3X20.

L'actionneur manuel 31a est agencé pour que lorsque le premier crochet 29a se trouve dans sa position de dégagement et qu'aucune action manuelle n'est exercée sur cet actionneur manuel 31a, le pêne 3X1 porté par l'actionneur manuel 31a est alors en appui contre l'encoche supplémentaire 3X20 de manière à maintenir le premier crochet 29a dans cette position de dégagement.

Cet actionneur manuel 31a est agencé pour libérer le premier crochet 29a vis-à-vis de sa position de dégagement sous l'effet d'une commande manuelle exercée sur cet actionneur manuel 31a et ainsi autoriser le déplacement de ce premier crochet 29a vers sa position de serrage.

De manière similaire, la deuxième interface de fixation 1b peut aussi comporter un actionneur manuel agencé pour déplacer ledit deuxième crochet entre sa position de dégagement et sa position de serrage.

Typiquement, cette deuxième interface 1b est fonctionnellement identique à la première interface 1a.

Pour permettre la fixation d'une interface de fixation 1a, 1b sur la structure tubulaire du fauteuil 100, on peut faire en sorte que cette interface de fixation comprenne :
- une interface de serrage 35a donnée pour serrer une partie tubulaire du fauteuil sélectionnée d'un groupe d'interfaces de serrage 35a comprenant : un collier de serrage, une pince de serrage dotée d'au moins deux mâchoires mobiles définissant ensemble une zone de serrage d'une surface tubulaire, un étrier doté d'une bride de serrage adapté à serrer un tube entre l'étrier et la bride ; et
- un élément de contrainte 35b de ladite interface de serrage donnée 35a, cet élément de contrainte 35b étant un élément du groupe d'éléments de contrainte comprenant un mécanisme de serrage par liaison vis/écrou, un mécanisme de serrage par grenouillère, un mécanisme de serrage par came.

Le terme grenouillère désigne un dispositif de serrage mécanique composé de deux biellettes articulées, ce dispositif de serrage se bloquant lorsque l'axe d'articulation entre les deux biellettes a dépassé le point d'alignement entre les axes d'articulation des deux bielles et arrive en butée sur une surface d'arrêt.

Le blocage du système de grenouillère repose sur l'élasticité de l'un au moins des composants. Une fois la grenouillère bloquée, seule la résistance mécanique des composants limite la force de serrage.

Pour exemple, dans le mode de réalisation illustré aux figures 2 à 4c, chaque interface de fixation 1a, 1b donnée comporte :
- une interface de serrage constituée par une pince de serrage dotée de deux mâchoires ; et
- un élément de contrainte 35b constitué d'un mécanisme de serrage par came agencé pour forcer le rapprochement de ces deux mâchoires.

Comme on le comprend des figures 4a et 4b, 6a, 6b, la première interface de fixation 1a et le premier appareillage de liaison 22a peuvent comporter des formes complémentaires entre elles pour permettre un emboîtement entre l'interface de fixation 1a et le premier appareillage de liaison 22a lorsque le système de liaison 0 est dans sa configuration de liaison.

De même, la deuxième interface de fixation 1b et le deuxième appareillage de liaison 22b peuvent comporter des formes complémentaires entre elles pour permettre un emboîtement entre la deuxième interface de fixation 1b et le deuxième appareillage de liaison 22b lorsque le système de liaison 0 est dans sa configuration de liaison.

Chaque emboîtement donné d'un couple donné formé entre une interface de fixation 1a, 1b donnée et un appareillage de liaison correspondant 22a, 22b donné est tel que :
- lorsque le système de liaison 0 est dans sa configuration de libération et que l'interface de fixation 1a, 1b donnée est emboîtée vis-à-vis d'un appareillage de liaison correspondant 22a, 22b, le seul degré de liberté existant entre cette interface de fixation donnée 1a, 1b et cet appareillage de liaison 22a, 22b donné est une translation suivant un axe d'emboîtement donné qui est propre à ce couple donné (en l'occurrence l'axe d'emboîtement donné pour l'emboîtement de la première interface de fixation 1a avec le premier appareillage de liaison 22a est un premier axe d'emboîtement Z1-Z1 et l'axe d'emboîtement donné pour l'emboîtement de la deuxième interface 1b avec le deuxième appareillage de liaison 22b est un deuxième axe d'emboîtement Z2-Z2 distinct du premier axe d'emboîtement Z1-Z1) ; et que
- lorsque le système de liaison 0 est dans sa configuration de liaison et que l'interface de fixation 1a, 1b donnée est emboîtée vis-à-vis d'un appareillage de liaison correspondant 22a, 22b, cette interface de fixation donnée 1a, 1b est alors mécaniquement immobilisée / assujettie contre cet appareillage de liaison 22a, 22b donné.

Préférentiellement, comme illustré sur les figures 2, 4a à 10d, le système de liaison 0 est tel que :
- d'une part la première interface de fixation 1a et le premier appareillage de liaison 22a comportent des formes complémentaires entre elles pour permettre un emboîtement entre la première interface de fixation 1a et le premier appareillage de liaison 22a par translation du premier appareillage de liaison 22a vis-à-vis de la première interface de fixation 1b suivant un premier axe d'emboîtement Z1-Z1 ; et tel que
- d'autre part la deuxième interface de fixation 1b et le deuxième appareillage de liaison 22b comportent des formes complémentaires entre elles pour permettre un emboîtement entre la deuxième interface de fixation 1b et le deuxième appareillage de liaison 22b par translation du deuxième appareillage de liaison 22b vis-à-vis de la deuxième interface de fixation 1b suivant un deuxième axe d'emboîtement Z2-Z2.

Préférentiellement chacun de ces axes d'emboîtement Z1-Z1 et Z2-Z2 forme un angle fermé avec un plan perpendiculaire à l'axe longitudinal A-A qui est compris entre 30° et 90°, préférentiellement entre 45° et 90°.

Cet angle limite l'intensité de contrainte de la commande manuelle sous l'effet d'un effort radial appliqué sur la barre transversale 21.

Préférentiellement, le système de liaison 0 selon l'invention est tel que :
- d'une part les formes complémentaires entre la première interface de fixation 1a et le premier appareillage de liaison 22a sont telles que lorsque la première interface de fixation 1a et le premier appareillage de liaison 22a sont emboîtés, ils forment des obstacles mécaniques interdisant toute translation du premier appareillage de liaison 22a par rapport à la première interface de fixation 1a suivant l'une quelconque des directions radiales à l'axe longitudinal A-A de la barre transversale 21 (par direction radiale à l'axe longitudinal A-A, on entend une direction passant par cet axe A-A et perpendiculaire à cet axe A-A) ; et que
- d'une part les formes complémentaires entre la deuxième interface de fixation 1b et le deuxième appareillage de liaison 22b sont telles que lorsque la deuxième interface de fixation 1b et le deuxième appareillage de liaison 22b sont emboîtés, ils forment des obstacles mécaniques interdisant toute translation du deuxième appareillage de liaison 22b par rapport à la deuxième interface de fixation 1b suivant l'une quelconque des directions radiales à l'axe longitudinal A-A de la barre transversale 21.

Ainsi, les principaux efforts de traction ou de poussée appliqués sur la barre transversale 21 sont radiaux vis-à-vis de cette barre 21.

Grâce à ces formes complémentaires, ces efforts radiaux sont repris par des obstacles mécaniques formés par les emboîtements entre appareillage de liaison et interface de fixation.

On évite ainsi que les principaux efforts radiaux soient colinéaires de l'un quelconque desdits premier axe d'emboîtement Z1-Z1 et un deuxième axe d'emboîtement Z2-Z2.

Préférentiellement, chacun desdits emboîtements est un emboîtement agencé pour réaliser un coincement choisi parmi un coincement conique ou un coincement par coin.

Comme on le comprend en particulier des figures 6a et 6b, une tige latérale donnée 24a ou 24b passant dans l'appareillage de liaison donné qui lui correspond 22a, 22b est immobilisée en position dans cet appareillage de liaison donné par l'intermédiaire d'au moins une vis de pression, en l'occurrence deux vis filetées dans cet appareillage de liaison donné.

Chaque tête d'une vis donnée étant accessibles depuis l'extérieur de l'interface de fixation donnée 1a, 1b, y compris lorsque cet appareillage de liaison donné 22a, 22b est emboîté avec cette interface de fixation donnée 1a, 1b.

Pour cela, chaque interface de fixation donnée 1a, 1b peut comporter des perforations permettant l'accès audites têtes des vis, y compris lorsque cet appareillage de liaison donné 22a, 22b est emboîté avec l'interface de fixation donnée 1a, 1b qui lui correspond.

Cette manipulation est très confortable pour l'utilisateur qui peut visser chaque vis pression 1 donnée via un outil passant dans une perforation correspondante formée dans l'interface de fixation donnée 1a, 1b alors que l'appareillage de liaison 22a, 22b est fixé sur l'interface de fixation 1a, 1b qui lui correspond.

Le réglage de la hauteur de la tige transversale 21 est ainsi grandement facilité.

Ces caractéristiques permettant le réglage en position d'une tige latérale 24a, 24b vis-à-vis d'un appareillage de liaison 22a, 22b correspondant sont transposables à n'importe lequel des autres modes de réalisation des interfaces de fixation et appareillages de liaison ayant des formes complémentaires permettant un emboîtement entre ces formes.

Dans les modes de réalisations illustré sur les figures 1a à 6, on constate que chaque appareillage de liaison donné 22a, 22b est lié à une commande manuelle donnée 23a, 23b qui lui correspond et qui montée à pivotement sur cet appareillage de liaison donné 22a, 22b.

Dans la configuration de liaison, la première commande manuelle 23a est pivotée pour pénétrer dans une rainure correspondante R1 formée dans le premier appareillage de liaison 22a pour immobiliser / assujettir cette première interface de fixation donnée 1a contre ce premier appareillage de liaison 22a.

De même, dans la configuration de liaison, la deuxième commande manuelle 23b est pivotée pour pénétrer dans une rainure correspondante formée dans le deuxième appareillage de liaison 22b pour immobiliser / assujettir cette deuxième interface de fixation donnée 1b contre ce deuxième appareillage de liaison 22b.

Dans ce mode de réalisation, une commande manuelle 23a, 23b à la forme d'une platine pivotante sur l'appareillage de liaison correspondant et dont des bords de platine sont destinés à pénétrer dans la rainure correspondante, un papillon équipe cette platine pour permettre à l'utilisateur saisir la commande manuelle et pivoter la platine.

Selon un autre aspect, l'invention concerne un dispositif d'attelage 40, dont plusieurs modes de réalisation sont illustrés par les figures 1a, 1b, 15, 16a à 16d, 18a à 18e.

Ce dispositif d'attelage 40 est adapté à être assemblé sur une trottinette 200 dotée d'au moins une roue motorisée 201 et d'un plateau 202.

Ce dispositif d'attelage 40 comporte un mécanisme d'attelage qui comprend une première butée 41 et un premier crochet 42 qui définissent ensemble un premier espace de réception 43 entre cette première butée 41 et ce premier crochet 42.

Ce premier crochet 42 est mobile par rapport à cette première butée 41 entre une première position et une deuxième position.

Dans sa première position, le premier espace de réception 43 est conformé pour recevoir dans ce premier espace 43 une barre transversale 21 s'étendant suivant un axe longitudinal A-A de la barre 21 (par exemple la barre 21 du système de liaison 0) et pour interdire la sortie de cette barre transversale 21 hors de ce premier espace de réception 43 par translation de la barre suivant une quelconque direction radiale par rapport à un axe longitudinal A-A de cette barre 21.

Préférentiellement, ce premier espace de réception 43 est tel que lorsque la barre transversale 21 est reçue dans ce premier espace 43, elle est alors serrée par le premier crochet 42 contre la première butée 41 et elle est ainsi maintenue dans ce premier espace de réception en y étant calée.

Dans sa deuxième position, le premier espace de réception 43 présente une ouverture orientée pour pouvoir librement déplacer ladite barre transversale 21 entre ce premier espace de réception 43 et une zone externe à ce premier espace de réception 43 par translation de la barre transversale 21 suivant ladite direction de déplacement D1 radiale par rapport à l'axe longitudinal A-A de la barre 21.

Pour la compréhension de ce dispositif d'attelage 40 selon l'invention, le premier espace de réception 43 est délimité en périphérie, d'un côté par la première butée 41 et d'un autre côté par le premier crochet 42, dans la première position du premier crochet 42, l'axe longitudinal A-A de la barre de guidage reçue dans le premier espace de réception 43 s'étend perpendiculairement à un plan passant par la première butée 21 et par le premier crochet 42, c'est-à-dire un plan passant par la périphérie du premier espace de réception 43.

Préférentiellement le dispositif d'attelage 40 comporte une seule surface de guidage 60 de barre transversale 21 vers ledit premier espace de réception 43, cette seule surface de guidage 60 étant tangente audit premier espace de réception 43 et fixe par rapport à ce premier espace de réception 43.

Préférentiellement cette seule surface de guidage 60 est disposée pour s'étendre parallèlement audit plateau lorsque le dispositif d'attelage 40 est assemblé sur la trottinette. Dans l'exemple illustré, la surface de guidage 60 est une surface supérieure de la bride 47a.

Dans un mode de réalisation alternatif, la seule surface de guidage 60 du dispositif d'attelage 40 peut être orientée pour s'étendre dans un plan perpendiculaire audit plateau 202 lorsque le dispositif d'attelage (40) est assemblé sur la trottinette.

Alternativement, le dispositif d'attelage 40 peut être conformé pour que lorsqu'il est assemblé sur la trottinette 200, le plateau de la trottinette constitue une surface de guidage 60 de barre transversale 21 vers ledit premier espace de réception 43, cette surface de guidage 60 étant tangente audit premier espace de réception 43 et étant fixe par rapport à ce premier espace de réception 43.

Dans tous ces modes, la surface de guidage 60 s'étend majoritairement à l'extérieur dudit premier espace de réception 43, cette seule surface de guidage étant également tangente audit deuxième espace de réception 43b pour également guider ladite barre de guidage vers ce deuxième espace de réception 43b lors du déplacement de cette barre transversale 21 lors de son déplacement suivant la direction de déplacement D1.

Comme on le comprend des différentes figures 1a, 1b, 15 à 16d, et 18a à 18e, le dispositif d'attelage 40 est préférentiellement agencé pour s'assembler de manière amovible sur la trottinette par serrage d'au moins une partie de cette trottinette.

Pour cela, ce dispositif d'attelage peut comporter des moyens de serrage d'un plateau de trottinette ou d'une zone de guidon de trottinette.

Alternativement, ce dispositif d'attelage 40 pourrait être intégré à la trottinette de manière non amovible.

Préférentiellement, comme illustré par exemple sur les figures 16a, 16b, 16c, 16d et 17c, la barre transversale 21 peut comporter une section cylindrique telle que lorsque cette barre 21 est reçue dans le premier espace 43 et que le crochet 42 est dans sa première position, cette barre 21 puisse alors pivoter par rapport au dispositif d'attelage 40 autour d'un axe de symétrie longitudinale A-A de cette barre transversale 21.

Ceci est particulièrement avantageux pour permettre une orientation de la trottinette 200 par rapport au fauteuil 100 de manière que la roue directionnelle 204 de la trottinette 200 et les roues arrière 101, 102 du fauteuil et de la trottinette 201 soient simultanément en contact sur le sol et cela même si ce sol n'est pas plan.

Préférentiellement, cette barre transversale 21 et le dispositif d'attelage 40 sont agencés pour que lorsque cette barre 21 est reçue dans le premier espace 43 alors que le crochet 42 est dans sa première position, la barre transversale 21 soit alors interdite de translation par rapport au dispositif d'attelage 40 y compris le long de l'axe de symétrie longitudinale A-A de cette barre transversale 21.

Préférentiellement, le dispositif d'attelage 40 comporte un organe de manoeuvre 44 agencé pour commander le passage du premier crochet 42 de sa première position vers sa deuxième position.

Comme illustré sur les figures 1a, 1b, 15 à 18d, cet organe de manoeuvre 44 est préférentiellement actionné manuellement et il comporte préférentiellement un levier d'actionnement manuel monté pivotant autour d'un pivot Pvt40 qui est fixe sur la première bride 47a.

Ce mode de réalisation permet au passager installé sur la zone d'assise du fauteuil d'actionner manuellement l'organe de manoeuvre 44, en l'occurrence le levier 44.

Préférentiellement, le mécanisme d'attelage comporte un organe de rappel élastique 45 agencé pour rappeler ledit premier crochet 42 de sa deuxième position vers sa première position.

Ainsi, dès que la barre transversale 21 se trouve positionnée dans le premier espace de réception 43, le premier crochet 42 revient dans sa première position pour interdire la sortie de cette barre 21.

Préférentiellement, le mécanisme d'attelage est agencé pour déplacer le premier crochet 42 de sa première position vers sa deuxième position sous l'effet d'une poussée exercée par la barre transversale 21 sur une surface d'actionnement (421) du premier crochet 42, en direction dudit premier espace de réception 43.

Préférentiellement, ledit mécanisme d'attelage comprend une seconde butée 41b et un second crochet 42b qui définissent ensemble un second espace de réception 43b entre cette seconde butée 41b et ce second crochet 42b.

Ce second espace 43b est éloigné dudit premier espace de réception 43 et il est mobile par rapport à la seconde butée 41b entre des première et deuxième positions du second crochet 42b.

Dans la première position du second crochet 42b, le second espace de réception 43b est conformé pour recevoir la barre transversale 21 dans ce second espace 43b et pour interdire la sortie de cette barre transversale 21 hors de ce second espace de réception 43b.

Ce second espace de réception 43b est tel que lorsque la barre transversale 21 est reçue dans ce second espace 43b, elle est alors serrée par le second crochet 42b contre la seconde butée 41b et elle est ainsi maintenue dans ce second espace de réception 43b en y étant calée.

Dans la deuxième position du second crochet 42b, le second espace de réception 43b est conformé pour pouvoir librement déplacer ladite barre transversale 21 entre ce second espace de réception 43b et une zone externe Z à ce second espace de réception 43b.

Le mécanisme d'attelage et la barre transversale 21 sont agencés pour que la barre transversale 21 puisse se trouver simultanément dans les premier et second espaces 43, 43b alors que le premier crochet 42 se trouve dans sa première position et que le second crochet 42b se trouve dans sa première position.

A cette fin, les premier et second crochets 42, 42b sont préférentiellement liés entre eux par une barre de liaison 46 de manière à ce que ces premier et second crochets 42, 42b se déplacent ensemble entre leurs premières et deuxièmes positions respectives.

Cette liaison par la barre de liaison 46 permet aux premier et second crochets 42 42b de se trouver simultanément soit dans leurs premières positions respectives soit dans leurs deuxièmes positions respectives.

Préférentiellement, ce système de liaison 0 adopte sélectivement une configuration d'attelage (illustrée aux figures 1b, 16a, 16b, 16c, 16d, 17c) et une configuration dételée (illustrée aux figures 1a, 15, 17a, 17k, 18a, 18b, 18c, 18d 18e).

Dans la configuration d'attelage la première butée 41 du mécanisme d'attelage est dans sa première position et la barre transversale 21 est maintenue dans ledit premier espace de réception 43 qui est alors conformé pour interdire la sortie de la barre transversale 21 hors de ce premier espace de réception 43.

Dans la configuration dételée, la barre transversale 21 est également située à distance du premier espace de réception 43.

Dans la configuration d'attelage, la seconde butée 41b du mécanisme d'attelage est dans sa première position et la barre transversale 21 est maintenue dans ledit second espace de réception 43b qui est alors conformé pour interdire la sortie de la barre transversale 21 hors de ce second espace de réception 43b. Ainsi, la barre transversale 21 est simultanément en prise dans les premier et second espaces de réception 43, 43b du mécanisme d'attelage ce qui augmente la résistance de la liaison entre la barre transversale 21 et le mécanisme d'attelage.

Dans la configuration dételée, la barre transversale 21 est également située à distance du second espace de réception 43b.

Préférentiellement, comme illustré sur les figures 1a et 1b, 15 et 16a, le dispositif d'attelage 40 présente :
- au moins deux brides 47a, 47b espacées l'une de l'autre pour permettre le passage d'un plateau 202 de trottinette 200 entre ces au moins deux brides 47a, 47b ; et
- un mécanisme de bridage 48 agencé pour forcer le serrage du plateau 202 entre ces brides 47a, 47b.

Pour la compréhension de l'invention, l'espacement maximum des au moins deux brides 47a, 47b est adapté pour permettre le passage et le serrage d'un plateau 202 de trottinette de largeur strictement inférieure à 30cm et d'épaisseur strictement inférieure à 20 cm.

Dans les modes de réalisation illustrés aux figures 1a, 1b, 15, 16a, 16b, 16c, 16d, on voit :
- D'une part une première bride 47a du dispositif d'attelage, en l'occurrence une plaque supérieure, qui est destinée à venir en appui sur le dessus du plateau 202 de trottinette ; et
- D'autre part une deuxième bride 47b du dispositif d'attelage, en l'occurrence une plaque inférieure, qui est destinée à venir en appui contre le dessous du plateau 202 de trottinette.

Le mécanisme de bridage 48 est ici constitué de plusieurs tiges filetées agencées pour rapprocher ces première et deuxième brides l'une de l'autre afin de serrer le plateau 202 entre ces brides.

Chacune de ces tiges filetées passe au travers de perforations qui lui correspondent et qui sont respectivement pratiquées dans brides 47a, 47b.

Le même système de serrage du plateau par brides est utilisé dans le mode de réalisation du dispositif d'attelage illustré aux figures 18a à 18e. Sur ces figures 18a à 18e, pour simplifier la représentation, seule la première bride 47a est représentée.

Il est à noter que d'autres mécanismes de bridage pour serrer ces brides vis-à-vis du plateau 202 pourraient être utilisés comme des colliers de serrage.

Selon un autre aspect, l'invention concerne également un véhicule de transport V1 d'un passager comportant un fauteuil roulant à propulsion manuelle 100 pour porter ce passager et un système de liaison 0 selon l'un quelconque des modes de réalisation précités conformes à l'invention.

Ladite première interface de fixation 1a serrant une surface périphérique externe d'une première partie tubulaire 102a du fauteuil et ladite deuxième interface de fixation 1b serrant une surface périphérique externe d'une deuxième partie tubulaire 102b du fauteuil.

En l'occurrence, comme illustré sure les figures 1a, 1b et 2, ces première et deuxièmes parties tubulaires du fauteuil sont préférentiellement des montants d'armature du fauteuil qui sont sensiblement parallèles l'un par rapport à l'autre. Une fois que ces serrages sont réalisés, les première et deuxième interfaces 1a, 1b sont assujetties à la structure du fauteuil.

Comme on le comprend de la figure 1b qui décrit le véhicule V1 selon l'invention, le système de liaison 0 étant placé dans sa configuration de liaison de manière à ce que la structure détachable 2 soit assemblée aux première et deuxième interfaces de fixation 1a, 1b pour pouvoir transmettre des efforts de traction du fauteuil via la barre transversale 21 de la structure détachable 2.

Ce véhicule V1 selon l'invention comportant aussi :
- ladite trottinette 200; et
- ledit dispositif d'attelage 40 assemblé sur ladite trottinette, ce dispositif d'attelage 40 comportant un mécanisme d'attelage mobile entre une configuration d'attelage dans laquelle ladite barre transversale 21 est attelée au dispositif d'attelage 40 et une configuration dételée dans laquelle ladite barre transversale 21 est libérée vis-à-vis du dispositif d'attelage 40.

Ainsi, dans la configuration d'attelage, ce système de liaison est d'un côté attaché au fauteuil et d'un autre côté attaché à ladite trottinette, les roues arrières 101, 102 du fauteuil roulant et la roue motorisée 201 de la trottinette étant positionnées pour rouler ensemble sur un plan de sol tout en maintenant les roues directionnelles 204 du fauteuil éloignées du plan de sol, la roue motorisée étant ainsi positionnée pour entraîner la trottinette et fauteuil roulant.

Préférentiellement, comme illustré sur les figures 1a et 1b, le véhicule comporte aussi au moins une béquille 49 mobile entre une position repliée dans laquelle la béquille est éloignée d'un plan de sol pour permettre le déplacement de la trottinette par roulage sur ce plan de sol et une position déployée pour positionner la trottinette 200 dans une position prédéterminée par rapport audit plan de sol sur lequel repose la trottinette.

Lorsque la béquille 49 est déployée, la trottinette est positionnée sur le plan de sol et l'usager du fauteuil roulant peut alors manoeuvrer son fauteuil sans avoir à tenir la trottinette. Les phases d'attelage et de dételage du fauteuil sont ainsi grandement facilitées.

Préférentiellement cette béquille est portée par le dispositif d'attelage 40. Ceci permet de fournir une béquille adaptée à la géométrie du dispositif d'attelage 40 pour définir une position stable de la trottinette sur le sol.

Une telle béquille peut s'étendre d'un seul côté du dispositif d'attelage 40 ou préférentiellement former un appui de part et d'autre de ce dispositif d'attelage 40.

L'invention n'est pas limitée aux exemples décrits précédemment et peut comporter d'autres modes de réalisation, par exemple, l'invention peut aussi porter sur :
- un dispositif d'attelage adapté à être assemblé avec une barre transversale (comme présenté précédemment), ce dispositif d'attelage étant considéré seul, c'est-à-dire sans la trottinette destinée à le porter ; ou sur
- une trottinette comportant un dispositif d'attelage tel que présenté précédemment, ce dispositif d'attelage étant intégré à la trottinette ;
- toute combinaison possible entre l'un quelconque des modes de réalisation d'interface de fixation et/ou de l'un quelconque des modes de réalisation d'appareillage de liaison et/ou de l'un quelconque des modes de réalisation de structure détachable 2 et/ou de l'un quelconque des modes de réalisation du dispositif d'attelage 40.

Bien que l'on a décrit un système de liaison comportant deux interfaces de fixation 1a, 1b, il est également possible d'avoir un plus grand nombre d'interfaces de fixation chacune agencée pour sélectivement serrer une partie tubulaire de la structure du fauteuil.

En augmentant le nombre de ces fixations, on améliore la résistance de la liaison mécanique entre le système de liaison et le fauteuil.

Bien que le dispositif d'attelage selon l'invention soit principalement destiné à être attelé à un fauteuil roulant à propulsion manuelle, ce dispositif d'attelage pourrait être utilisé pour atteler tout autre élément devant être tracté comme un chariot, une remorque.

Au lieu que le dispositif d'attelage 40 selon l'invention soit porté par la trottinette 200, il pourrait alternativement être porté et fixé directement sur la barre transversale 2 pour pouvoir être porté par le fauteuil roulant.

Dans ce cas, la trottinette est alors équipée d'une barre d'attelage.

Dans ce mode, lorsque le système de liaison 0 est dans sa configuration d'attelage son dispositif d'attelage 40 est alors attelé à la barre d'attelage portée par la trottinette. En d'autres termes, dans ce mode particulier, le dispositif d'attelage 40 selon l'invention coopère avec la barre d'attelage de la manière précédemment décrite en référence à l'assemblage du dispositif d'attelage 40 avec la barre transversale 21.

Bien que l'ensemble des modes de réalisation précédents présentent une seule barre transversale 21, il est aussi possible que cette barre soit remplacée par deux barres transversales coaxiales entre elles pour permettre un pivotement du dispositif d'attelage 40 autour d'un axe passant par ces deux barres lorsque ces barres sont respectivement positionnées dans les premier et second espaces de réception 42, 42b délimités par les crochets 42, 42b.

## Revendications

1. Système de liaison (0) pour relier un fauteuil roulant à propulsion manuelle (100) à une trottinette (200) dotée d'au moins une roue motorisée (201), le système (0) comprend :
- une première interface de fixation (1a) adaptée pour serrer une surface périphérique externe d'une première partie tubulaire du fauteuil (102a);
- une deuxième interface de fixation (1b) adaptée pour serrer une surface périphérique externe d'une deuxième partie tubulaire (102b) du fauteuil;
- une structure détachable (2) dotée d'au moins une barre transversale (21) ;
le système de liaison (0) étant agencé pour sélectivement adopter :
- une configuration de liaison dans laquelle la structure détachable (2) est assemblée aux première et deuxième interfaces de fixation (1a, 1b) pour pouvoir transmettre des efforts entre la barre transversale (21) et ces première et deuxième interfaces de fixation (1a, 1b) ; et
- une configuration de libération dans laquelle la structure détachable (2) est détachée vis-à-vis de chacune desdites première et deuxième interfaces de fixation (1a, 1b), **caractérisé en ce que** la structure détachable (2) comporte des première et seconde tiges latérales (24a, 24b), la structure détachable (2) étant articulée pour être déformable entre une forme déployée et une forme repliée,
- dans sa forme déployée, la structure détachable (2) est en forme de U ;
- dans sa forme repliée, d'une part la première tige latérale (24a) présente un axe longitudinal s'étendant globalement à plus grande proximité de l'axe longitudinal (A-A) de la barre transversale que dans la forme déployée de la structure détachable, et d'autre part la seconde tige latérale (24b) présente un axe longitudinal s'étendant globalement à plus grande proximité de l'axe longitudinal (A-A) de la barre transversale (21) que dans la forme déployée de la structure détachable.

2. Système de liaison (0) selon la revendication 1, comportant des premier et deuxième appareillages de liaison (22a, 22b) reliés entre eux via ladite au moins une barre transversale (21) ;
le premier appareillage de liaison (22a) étant mobile, par déplacement d'une première commande manuelle (23a), entre :
- une position de liaison dans laquelle le premier appareillage de liaison (22a) solidarise la structure détachable (2) sur ladite première interface de fixation (1a) ; et
- une position de libération dans laquelle le premier appareillage de liaison (22a) autorise l'écartement de la structure détachable (2) vis-à-vis de ladite première interface de fixation (1a) ;
le deuxième appareillage de liaison (22b) étant mobile, par déplacement d'une deuxième commande manuelle (23b) distincte de ladite première commande manuelle (23a), entre :
- une position de liaison dans laquelle ce deuxième appareillage de liaison (22b) fixe la structure détachable (2) sur ladite deuxième interface de fixation (1b) ; et
- une position de libération dans laquelle le deuxième appareillage de liaison (22b) autorise l'écartement de la structure détachable (2) vis-à-vis de ladite deuxième interface de fixation (1b).

3. Système de liaison (0) selon la revendication 2, dans lequel :
- ledit premier appareillage de liaison (22a) est porté par ladite première tige latérale (24a) et est agencé pour adopter une position fixe par rapport à cette première tige latérale (24a), cette position fixe du premier appareillage de liaison (22a) étant sélectionnée parmi une pluralité de positions fixes prédéfinies du premier appareillage de liaison (22a) ; et
- ledit deuxième appareillage de liaison (22b) est porté par ladite seconde tige latérale (24b) et est agencé pour adopter une position fixe par rapport à cette seconde tige latérale (24b), cette position fixe du deuxième appareillage de liaison (22b) étant sélectionnée parmi une pluralité de positions fixes prédéfinies du deuxième appareillage de liaison (22b).

4. Système de liaison (0) selon la revendication 2, dans lequel :
- d'une part la première interface de fixation (1a) et le premier appareillage de liaison (22a) comportent des formes complémentaires entre elles pour permettre un emboîtement entre la première interface de fixation (1a) et le premier appareillage de liaison (22a) par translation du premier appareillage de liaison (22a) vis-à-vis de la première interface de fixation (1b) suivant un premier axe d'emboîtement (Z1-Z1) ; et
- d'autre part la deuxième interface de fixation (1b) et le deuxième appareillage de liaison (22b) comportent des formes complémentaires entre elles pour permettre un emboîtement entre la deuxième interface de fixation (1b) et le deuxième appareillage de liaison (22b) par translation du deuxième appareillage de liaison (22b) vis-à-vis de la deuxième interface de fixation (1b) suivant un deuxième axe d'emboîtement (Z2-Z2).

5. Système de liaison (0) selon la revendication 4, dans lequel :
- d'une part les formes complémentaires entre la première interface de fixation (1a) et le premier appareillage de liaison (22a) sont agencées pour que lorsque la première interface de fixation (1a) et le premier appareillage de liaison (22a) sont emboîtés, ils forment des obstacles mécaniques interdisant toute translation du premier appareillage de liaison (22a) par rapport à la première interface de fixation (1a) suivant l'une quelconque des directions radiales à l'axe longitudinal (A-A) de la barre transversale (21) ; et
- d'autre part les formes complémentaires entre la deuxième interface de fixation (1b) et le deuxième appareillage de liaison (22b) sont agencées pour que lorsque la deuxième interface de fixation (1b) et le deuxième appareillage de liaison (22b) sont emboîtés, ils forment des obstacles mécaniques interdisant toute translation du deuxième appareillage de liaison (22b) par rapport à la deuxième interface de fixation (1b) suivant l'une quelconque des directions radiales à l'axe longitudinal (A-A) de la barre transversale (21).

6. Système de liaison (0) selon l'une quelconque des revendications 2 à 5, dans lequel la structure détachable (2) comporte des moyens de réglage d'une distance d'écartement entre une zone de liaison de cette structure détachable (2) avec la première interface de fixation (1a) et une zone de liaison de cette structure détachable (2) avec la deuxième interface de fixation (1b), ces moyens de réglage adoptant sélectivement une configuration bloquée dans laquelle ladite distance d'écartement est fixée et une configuration de réglage dans laquelle cette distance d'écartement est variable.

7. Système de liaison selon la revendication 6, dans lequel ces moyens de réglage de distance d'écartement comportent des premier et second coulisseaux (24a1, 24b1) agencés pour coulisser à distance l'un de l'autre le long de la barre transversale (2).

8. Système de liaison (0) selon l'une quelconque des revendications 2 à 7, dans lequel :
- ledit premier appareillage de liaison (22a) comporte au moins une première paire de pênes complémentaire d'une première paire de gâches appartenant à la première interface de fixation (1a), les pênes de cette première paire de pênes étant contraints élastiquement vers une position d'assemblage de ces pênes dans les gâches de la première paire de gâches ; et
- ledit deuxième appareillage de liaison (22b) comporte au moins une deuxième paire de pênes (25b) complémentaire d'une deuxième paire de gâches (26b) appartenant à la deuxième interface de fixation (1b), les pênes de cette deuxième paire de pênes (25b) étant contraints élastiquement vers une position d'assemblage de ces pênes dans les gâches de la deuxième paire de gâches (26b) ; et le système de liaison (0) étant dans sa configuration de liaison lorsque ces premier et deuxième appareillages de liaison (22a, 22b) sont dans leurs positions d'assemblage respectives.

9. Système de liaison (0) selon la revendication 8, dans lequel :
- le premier appareillage de liaison (22a) comporte une came (28) de déplacement des pênes de ladite première paire de pênes vers la position d'assemblage de ces pênes dans les gâches de la première paire de gâches ; et
- le deuxième appareillage de liaison comporte une came de déplacement des pênes de ladite deuxième paire de pênes vers la position d'assemblage de ces pênes dans les gâches de la deuxième paire de gâches.

10. Système de liaison (0) selon l'une quelconque des revendications 1 à 7, dans lequel la première interface de fixation (1a) comporte au moins un premier crochet (29a) mobile entre :
- une position de dégagement dans laquelle ce premier crochet libère un passage vers une première encoche (30a) de réception d'une première partie de la structure détachable (2), cette première encoche (30a) étant formée dans la première interface de fixation (1a) ; et
- une position de serrage dans laquelle ce premier crochet (29a) serre ladite première partie de la structure détachable (2) à l'intérieur de la première encoche de réception (30a), la structure détachable (2) étant alors immobilisée dans cette première encoche (30a) et dans lequel la première interface de fixation (1a) comporte un actionneur manuel (31a) agencé pour déplacer ledit premier crochet (29a) entre sa position de dégagement et sa position de serrage.

11. Système de liaison (0) selon l'une quelconque des revendications 1 à 10, comprenant un dispositif d'attelage (40) adapté à être assemblé sur une trottinette (200) dotée d'au moins une roue motorisée (201) et d'un plateau (202), ce dispositif d'attelage (40) comportant un mécanisme d'attelage qui comprend une première butée (41) et un premier crochet (42) qui définissent ensemble un premier espace de réception (43) entre cette première butée (41) et ce premier crochet (42), ce premier crochet (42) étant mobile par rapport à cette première butée (41) entre une première position et une deuxième position :
- dans sa première position, le premier espace de réception (43) étant conformé pour recevoir la barre transversale (21) dans ce premier espace (43) et pour interdire la sortie de cette barre transversale (21) hors de ce premier espace de réception (43) par translation de cette barre suivant une quelconque direction radiale par rapport à un axe longitudinal (A-A) de cette barre (21) ; et
- dans sa deuxième position, le premier espace de réception (43) présente une ouverture orientée pour pouvoir librement déplacer ladite barre transversale (21) entre ce premier espace de réception (43) et une zone externe (Z) à ce premier espace de réception (43) par translation de la barre transversale (21) suivant une direction de déplacement (D1) radiale par rapport à l'axe longitudinal (A-A) de la barre (21).

12. Système de liaison (0) selon la revendication 11, dans lequel le dispositif d'attelage (40) comporte une seule surface de guidage (60) de barre transversale (21) vers ledit premier espace de réception (43), cette seule surface de guidage (60) étant tangente audit premier espace de réception (43) et fixe par rapport à ce premier espace de réception (43), cette seule surface de guidage (60) est configurée pour s'étendre parallèlement audit plateau lorsque le dispositif d'attelage (40) est assemblé sur la trottinette (200).

13. Système selon l'une quelconque des revendications 11 ou 12, dans lequel le mécanisme d'attelage est agencé pour déplacer le premier crochet (42) de sa première position vers sa deuxième position sous l'effet d'une poussée exercée par la barre transversale (21) sur une surface d'actionnement (421) du premier crochet (42), en direction dudit premier espace de réception (43).

14. Système selon l'une quelconque des revendications 11 à 13, dans lequel ledit mécanisme d'attelage comprend une seconde butée (41b) et un second crochet (42b) qui définissent ensemble un second espace de réception (43b) entre cette seconde butée (41b) et ce second crochet (42b), ce second espace (43b) étant éloigné dudit premier espace de réception (43), ce second crochet (42b) étant mobile par rapport à cette seconde butée (41b) entre des première et deuxième positions du second crochet (42b) :
- dans la première position du second crochet (42b), le second espace de réception (43b) étant conformé pour recevoir la barre transversale (21) dans ce second espace (43b) et pour interdire la sortie de cette barre transversale (21) hors de ce second espace de réception (43b) ; et
- dans la deuxième position du second crochet, le second espace de réception (43b) est conformé pour pouvoir librement déplacer ladite barre transversale (21) entre ce second espace de réception (43b) et une zone externe (Z) à ce second espace de réception (43b), le mécanisme d'attelage et la barre transversale (21) sont agencés pour que la barre transversale (21) puisse se trouver simultanément dans les premier et second espaces (43, 43b) alors que le premier crochet (42) se trouve dans sa première position et que le second crochet (42b) se trouve dans sa première position, et dans lequel les premier et second crochets (42, 42b) sont liés entre eux par une barre de liaison (46) de manière à ce que ces premier et second crochets (42, 42b) se déplacent ensemble entre leurs premières et deuxièmes positions respectives.

15. Véhicule de transport (V1) d'un passager comportant un fauteuil roulant à propulsion manuelle (100) pour porter ce passager et un système de liaison (0) selon l'une quelconque des revendications 1 à 14, ladite première interface de fixation (1a) serrant une surface périphérique externe d'une première partie tubulaire (102a) du fauteuil et ladite deuxième interface de fixation (1b) serrant une surface périphérique externe d'une deuxième partie tubulaire (102b) du fauteuil, le système de liaison (0) étant placé dans sa configuration de liaison de manière à ce que la structure détachable (2) soit assemblée aux première et deuxième interfaces de fixation (1a, 1b) pour pouvoir transmettre des efforts de traction du fauteuil via la barre transversale 21 de la structure détachable (2) .

16. Véhicule de transport (V1) d'un passager selon la revendication 15, comportant en outre :
- une trottinette (200) dotée d'au moins une roue motorisée (201) et d'un plateau (202); et
- un dispositif d'attelage (40) assemblé sur ladite trottinette, ce dispositif d'attelage (40) comportant un mécanisme d'attelage mobile entre une configuration d'attelage dans laquelle ladite barre transversale (21) est attelée au dispositif d'attelage (40) et une configuration dételée dans laquelle ladite barre transversale (21) est libérée vis-à-vis du dispositif d'attelage (40), le dispositif d'attelage (40) comportant un organe de manoeuvre (44) agencé pour commander le passage du mécanisme d'attelage de sa configuration d'attelage vers sa configuration dételée.

17. Véhicule (V1) selon la revendication 16, dans lequel le mécanisme d'attelage comprend une première butée (41) et un premier crochet (42) qui définissent ensemble un premier espace de réception (43) entre cette première butée (41) et ce premier crochet (42), ce premier crochet (42) étant mobile par rapport à cette première butée (41) entre une première position et une deuxième position :
- dans sa première position, le premier espace de réception (43) étant conformé pour recevoir la barre transversale (21) dans ce premier espace (43) et pour interdire la sortie de cette barre transversale (21) hors de ce premier espace de réception (43) ; et
- dans sa deuxième position, le premier espace de réception (43) étant conformé pour pouvoir librement déplacer ladite barre transversale (21) entre ce premier espace de réception (43) et une zone externe à ce premier espace de réception (43),
l'organe de manoeuvre (40) est agencé pour commander le déplacement du premier crochet (42) de sa première position vers sa deuxième position pour ainsi induire le passage du mécanisme d'attelage de sa configuration d'attelage vers sa configuration dételée ; et dans lequel le plateau de la trottinette constitue une surface de guidage (60) de barre transversale 21 vers ledit premier espace de réception (43), cette surface de guidage 60 étant tangente audit premier espace de réception (43) et étant fixe par rapport à ce premier espace de réception (43).

## Patentansprüche

1. Verbindungssystem (0) zum Verbinden eines Rollstuhls (100) mit manuellem Antrieb mit einem Scooter (200), der mit mindestens einem motorisierten Rad (201) versehen ist, wobei das System (0) umfasst:
- eine erste Befestigungsschnittstelle (1a), die geeignet ist, eine äußere Umfangsfläche eines ersten rohrförmigen Teils (102a) des Rollstuhls einzuspannen;
- eine zweite Befestigungsschnittstelle (1b), die geeignet ist, eine äußere Umfangsfläche eines zweiten rohrförmigen Teils (102b) des Rollstuhls einzuspannen;
- eine lösbare Struktur (2), die mit mindestens einer Querstange (21) versehen ist;
wobei das Verbindungssystem (0) ausgebildet ist, selektiv anzunehmen:
- eine Verbindungskonfiguration, in der die lösbare Struktur (2) mit der ersten und der zweiten Befestigungsschnittstelle (1a, 1b) zusammengefügt ist, um Kräfte zwischen der Querstange (21) und dieser ersten und zweiten Befestigungsschnittstelle (1a, 1b) übertragen zu können; und
- eine Freigabekonfiguration, in der die lösbare Struktur (2) in Bezug auf jede der genannten ersten und zweiten Befestigungsschnittstellen (1a, 1b) gelöst ist, **dadurch gekennzeichnet, dass** die lösbare Struktur (2) eine erste und eine zweite Seitenstange (24a, 24b) umfasst, wobei die lösbare Struktur (2) angelenkt ist, um zwischen einer ausgeklappten Form und einer eingeklappten Form verformbar zu sein,
- wobei die lösbare Struktur (2) in ihrer ausgeklappten Form eine U-Form hat;
- in ihrer eingeklappten Form weist einerseits die erste Seitenstange (24a) eine Längsachse auf, die im Allgemeinen näher an der Längsachse (A-A) der Querstange verläuft als in der ausgeklappten Form der lösbaren Struktur (24b), und andererseits weist die zweite Seitenstange (24b) eine Längsachse auf, die im Allgemeinen näher an der Längsachse (A-A) der Querstange (21) verläuft als in der ausgeklappten Form der lösbaren Struktur.

2. Verbindungssystem (0) nach Anspruch 1, umfassend eine erste und eine zweite Verbindungsapparatur (22a, 22b), die miteinander über die genannte mindestens eine Querstange (21) verbunden sind;
wobei die erste Verbindungsapparatur (22a) durch Verschieben einer ersten Handsteuerung (23a) beweglich ist zwischen:
- einer Verbindungsposition, in der die erste Verbindungsapparatur (22a) die lösbare Struktur (2) fest an der genannten ersten Befestigungsschnittstelle (1a) befestigt; und
- einer Freigabeposition, in der die erste Verbindungsapparatur (22a) das Entfernen der lösbaren Struktur (2) in Bezug auf die genannte erste Befestigungsschnittstelle (1a) gestattet;
wobei die zweite Verbindungsapparatur (22b) durch Verschieben einer zweiten Handsteuerung (23b), die von der genannten ersten Handsteuerung (23a) verschieden ist, beweglich ist zwischen:
- einer Verbindungsposition, in der diese zweite Verbindungsapparatur (22b) die lösbare Struktur (2) an der genannten zweiten Befestigungsschnittstelle (1b) befestigt; und
- einer Freigabeposition, in der die zweite Verbindungsapparatur (22b) das Entfernen der lösbaren Struktur (2) in Bezug auf die genannte zweite Befestigungsschnittstelle (1b) gestattet.

3. Verbindungssystem (0) nach Anspruch 2, bei dem:
- die genannte erste Verbindungsapparatur (22a) von der genannten ersten Seitenstange (24a) getragen wird und ausgebildet ist, eine ortsfeste Position in Bezug auf diese erste Seitenstange (24a) anzunehmen, wobei diese ortsfeste Position der ersten Verbindungsapparatur (22a) unter einer Vielzahl von vordefinierten ortsfesten Positionen der ersten Verbindungsapparatur (22a) ausgewählt wird; und
- die genannte zweite Verbindungsapparatur (22b) von der genannten zweiten Seitenstange (24b) getragen wird und ausgebildet ist, eine ortsfeste Position in Bezug auf diese zweite Seitenstange (24b) anzunehmen, wobei diese ortsfeste Position der zweiten Verbindungsapparatur (22b) unter einer Vielzahl von vordefinierten ortsfesten Positionen der zweiten Verbindungsapparatur (22b) ausgewählt wird.

4. Verbindungssystem (0) nach Anspruch 2, bei dem:
- einerseits die erste Befestigungsschnittstelle (1a) und die erste Verbindungsapparatur (22a) zueinander komplementäre Formen umfassen, um ein Ineinandergreifen zwischen der ersten Befestigungsschnittstelle (1a) und der ersten Verbindungsapparatur (22a) durch Translation der ersten Verbindungsapparatur (22a) in Bezug auf die erste Befestigungsschnittstelle (1b) entlang einer ersten Aufsteckachse (Z1-Z1) zu gestatten; und
- andererseits die zweite Befestigungsschnittstelle (1b) und die zweite Verbindungsapparatur (22b) zueinander komplementäre Formen umfassen, um ein Ineinandergreifen zwischen der zweiten Befestigungsschnittstelle (1b) und der zweiten Verbindungsapparatur (22b) durch Translation der zweiten Verbindungsapparatur (22b) in Bezug auf die zweite Befestigungsschnittstelle (1b) entlang einer zweiten Aufsteckachse (Z2-Z2) zu gestatten.

5. Verbindungssystem (0) nach Anspruch 4, bei dem:
- einerseits die komplementären Formen zwischen der ersten Befestigungsschnittstelle (1a) und der ersten Verbindungsapparatur (22a) so ausgebildet sind, dass, wenn die erste Befestigungsschnittstelle (1a) und die erste Verbindungsapparatur (22a) ineinandergesteckt sind, sie mechanische Hindernisse bilden, die jede Translation der ersten Verbindungsapparatur (22a) in Bezug auf die erste Befestigungsschnittstelle (1a) in einer beliebigen der radialen Richtungen zur Längsachse (A-A) der Querstange (21) untersagen; und
- andererseits die komplementären Formen zwischen der zweiten Befestigungsschnittstelle (1b) und der zweiten Verbindungsapparatur so (22b) ausgebildet sind, dass, wenn die zweite Befestigungsschnittstelle (1b) und die zweite Verbindungsapparatur (22b) ineinandergesteckt sind, sie mechanische Hindernisse bilden, die jede Translation der zweiten Verbindungsapparatur (22b) in Bezug auf die zweite Befestigungsschnittstelle (1b) in einer beliebigen der radialen Richtungen zur Längsachse (A-A) der Querstange (21) untersagen.

6. Verbindungssystem (0) nach einem der Ansprüche 2 bis 5, bei dem die lösbare Struktur (2) Einstellmittel zum Einstellen einer Abstandsdistanz zwischen einer Verbindungszone dieser lösbaren Struktur (2) mit der ersten Befestigungsschnittstelle (1a) und einer Verbindungszone dieser lösbaren Struktur (2) mit der zweiten Befestigungsschnittstelle (1b) umfassen, wobei diese Einstellmittel selektiv eine blockierte Konfiguration annehmen, in der die genannte Abstandsdistanz fest ist, sowie eine Einstellkonfiguration, in der diese Abstandsdistanz variabel ist.

7. Verbindungssystem nach Anspruch 6, bei dem diese Einstellmittel zum Einstellen der Abstandsdistanz einen ersten und einen zweiten Schieber (24a1, 24b1) umfassen, die ausgebildet sind, mit Abstand zueinander entlang der Querstange (2) zu gleiten.

8. Verbindungssystem (0) nach einem der Ansprüche 2 bis 7, bei dem:
- die genannte erste Verbindungsapparatur (22a) mindestens ein erstes Paar von Riegeln umfasst, das komplementär zu einem ersten Paar von Gegenstücken ist, die zu der ersten Befestigungsschnittstelle (1a) gehören, wobei die Riegel dieses ersten Paares von Riegeln elastisch in eine Montageposition dieser Riegel in den Gegenstücken des ersten Paares von Gegenstücken gespannt sind; und
- die genannte zweite Verbindungsapparatur (22b) mindestens ein zweites Paar von Riegeln (25b) umfasst, die komplementär zu einem zweiten Paar von Gegenstücken (26b) sind, die zu der zweiten Befestigungsschnittstelle (1b) gehören, wobei die Riegel dieses zweiten Paares von Riegeln (25b) elastisch in eine Montageposition dieser Riegel in die Gegenstücke des zweiten Paares von Gegenstücken (26b) gespannt sind; und
wobei das Verbindungssystem (0) in seiner Verbindungskonfiguration ist, wenn diese erste und diese zweite Verbindungsapparatur (22a, 22b) in ihren jeweiligen Montagepositionen sind.

9. Verbindungssystem (0) nach Anspruch 8, bei dem:
- die erste Verbindungsapparatur (22a) einen Nocken (28) zum Verschieben der Riegel des genannten ersten Paares von Riegeln in Richtung der Montageposition dieser Riegel in den Gegenstücken des ersten Paares von Gegenstücken umfasst; und
- die zweite Verbindungsapparatur einen Nocken zum Verschieben der Riegel des genannten zweiten Paares von Riegeln in die Montageposition dieser Riegel in den Gegenstücken des zweiten Paares von Gegenstücken umfasst.

10. Verbindungssystem (0) nach einem der Ansprüche 1 bis 7, bei dem die erste Befestigungsschnittstelle (1a) mindestens einen ersten Haken (29a) umfasst, der beweglich ist zwischen:
- einer Freigabeposition, in der dieser erste Haken einen Durchgang zu einer ersten Aufnahmekerbe (30a) zur Aufnahme eines ersten Teils der lösbaren Struktur (2) freigibt, wobei diese erste Kerbe (30a) in der ersten Befestigungsschnittstelle (1a) ausgebildet ist; und
- eine Festspannposition, in der dieser erste Haken (29a) den genannten ersten Teil der lösbaren Struktur (2) im Inneren der ersten Aufnahmekerbe (30a) festspannt, wobei die lösbare Struktur (2) dann in dieser ersten Kerbe (30a) blockiert ist, und bei dem der die erste Befestigungsschnittstelle (1a) einen manuellen Aktor (31a) umfasst, der ausgebildet ist, den genannten ersten Haken (29a) zwischen seiner Freigabeposition und seiner Festspannposition zu verschieben.

11. Verbindungssystem (0) nach einem der Ansprüche 1 bis 10, umfassend eine Kupplungsvorrichtung (40), die geeignet ist, an einem Scooter (200) montiert zu werden, der mit mindestens einem motorisierten Rad (201) und einer Platte (202) versehen ist, wobei diese Kupplungsvorrichtung (40) einen Kupplungsmechanismus umfasst, der einen ersten Anschlag (41) und einen ersten Haken (42) umfasst, die zusammen einen ersten Aufnahmeraum (43) zwischen diesem ersten Anschlag (41) und diesem ersten Haken (42) definieren, wobei dieser erste Haken (42) in Bezug auf diesen ersten Anschlag (41) zwischen einer ersten Position und einer zweiten Position beweglich ist:
- wobei in dessen erster Position der erste Aufnahmeraum (43) so geformt ist, dass er die Querstange (21) in diesem ersten Raum (43) aufnimmt und den Austritt dieser Querstange (21) aus diesem ersten Aufnahmeraum (43) durch Translation dieser Stange in einer beliebigen radialen Richtung in Bezug auf eine Längsachse (A-A) dieser Stange (21) untersagt; und
- wobei in dessen zweiter Position der erste Aufnahmeraum (43) eine Öffnung aufweist, die ausgerichtet ist, die genannte Querstange (21) zwischen diesem ersten Aufnahmeraum (43) und einer sich außerhalb dieses ersten Aufnahmeraums (43) befindlichen Zone (Z) durch Translation der Querstange (21) in einer radialen Verschiebungsrichtung (D1) in Bezug auf die Längsachse (A-A) der Stange (21) verschieben zu können.

12. Verbindungssystem (0) nach Anspruch 11, bei dem die Kupplungsvorrichtung (40) eine einzige Führungsfläche (60) zur Führung der Querstange (21) in Richtung des genannten ersten Aufnahmeraums (43) umfasst, wobei diese einzige Führungsfläche (60) zum genannten ersten Aufnahmeraum tangential und in Bezug auf diesen ersten Aufnahmeraum ortsfest ist, wobei diese einzige Führungsfläche (60) ausgebildet ist, sich parallel zur genannten Platte zu erstrecken, wenn die Kupplungsvorrichtung (40) an dem Scooter (200) montiert ist.

13. System nach einem der Ansprüche 11 oder 12, bei dem der Kupplungsmechanismus ausgebildet ist, den ersten Haken (42) von seiner ersten Position in seine zweite Position unter der Wirkung eines Drucks zu verschieben, der von der Querstange (21) auf eine Betätigungsfläche (421) des ersten Hakens (42) ausgeübt wird, in Richtung des genannten ersten Aufnahmeraums (43).

14. System nach einem der Ansprüche 11 bis 13, bei dem der genannte Kupplungsmechanismus einen zweiten Anschlag (41b) und einen zweiten Haken (42b) umfasst, die zusammen einen zweiten Aufnahmeraum (43b) zwischen diesem zweiten Anschlag (41b) und diesem zweiten Haken (42b) definieren, wobei dieser zweite Raum (43b) von dem genannten ersten Aufnahmeraum (43) entfernt ist, wobei dieser zweite Haken (42b) in Bezug auf diesen zweiten Anschlag (41b) zwischen der ersten und der zweiten Position des zweiten Hakens (42b) beweglich ist:
- wobei in der ersten Position des zweiten Hakens (42b) der zweite Aufnahmeraum (43b) ausgebildet ist, die Querstange (21) in diesem zweiten Raum (43b) aufzunehmen und den Austritt dieser Querstange (21) aus diesem zweiten Aufnahmeraum (43b) zu untersagen; und
- wobei in der zweiten Position des zweiten Hakens der zweite Aufnahmeraum (43b) ausgebildet ist, die genannte Querstange (21) zwischen diesem zweiten Aufnahmeraum (43b) und einer sich außerhalb dieses zweiten Aufnahmeraums (43b) befindlichen Zone (Z) frei verschieben zu können, wobei der Kupplungsmechanismus und die Querstange (21) so ausgebildet sind, dass sich die Querstange (21) gleichzeitig in dem ersten und dem zweiten Raum (43, 43b) befinden kann, während sich der erste Haken (42) in seiner ersten Position befindet und sich der zweite Haken (42b) in seiner ersten Position befindet, und bei dem der erste und der zweite Haken (42, 42b) miteinander über eine Verbindungsstange (46) derart verbunden sind, dass sich dieser erste und dieser zweite Haken (42, 42b) zusammen zwischen ihren jeweiligen ersten und zweiten Positionen verschieben.

15. Transportfahrzeug (V1) zum Transport eines Fahrgasts, umfassend einen Rollstuhl (100) mit manuellem Antrieb zum Tragen dieses Fahrgasts und ein Verbindungssystem (0) nach einem der Ansprüche 1 bis 14, wobei die genannte erste Befestigungsschnittstelle (1a) eine äußere Umfangsfläche eines ersten rohrförmigen Teils (102a) des Rollstuhls einspannt und die genannte zweite Befestigungsschnittstelle (1b) eine äußere Umfangsfläche eines zweiten rohrförmigen Teils (102b) des Rollstuhls einspannt, wobei das Verbindungssystem (0) derart in seine Verbindungskonfiguration gebracht wird, dass die lösbare Struktur (2) mit der ersten und der zweiten Befestigungsschnittstelle (1a, 1b) zusammengefügt wird, um Zugkräfte des Rollstuhls über die Querstange (21) der lösbaren Struktur (2) übertragen zu können.

16. Transportfahrzeug (V1) zum Transport eines Fahrgasts nach Anspruch 15, ferner umfassend:
- einen Scooter (200), der mit mindestens einem motorisierten Rad (201) und einer Platte (202) versehen ist; und
- eine Kupplungsvorrichtung (40), die an dem genannten Scooter montiert ist, wobei diese Kupplungsvorrichtung (40) einen Kupplungsmechanismus umfasst, der zwischen einer Kupplungskonfiguration, in der die genannte Querstange (21) an die Kupplungsvorrichtung (40) gekuppelt ist, und einer Entkupplungskonfiguration beweglich ist, in der die genannte Querstange (21) in Bezug auf die Kupplungsvorrichtung (40) gelöst ist, wobei die Kupplungsvorrichtung (40) ein Betätigungselement (44) umfasst, das ausgebildet ist, den Übergang des Kupplungsmechanismus von seiner Kupplungskonfiguration in seine Entkupplungskonfiguration zu steuern.

17. Fahrzeug (V1) nach Anspruch 16, bei dem der Kupplungsmechanismus einen ersten Anschlag (41) und einen ersten Haken (42) umfasst, die zusammen einen ersten Aufnahmeraum (43) zwischen diesem ersten Anschlag (41) und diesem ersten Haken (42) definieren, wobei dieser erste Haken (42) in Bezug auf diesen ersten Anschlag (41) zwischen einer ersten Position und einer zweiten Position beweglich ist:
- wobei in dessen erster Position der erste Aufnahmeraum (43) ausgebildet ist, die Querstange (21) in diesem ersten Raum (43) aufzunehmen und den Austritt dieser Querstange (21) aus diesem ersten Aufnahmeraum (43) zu untersagen; und
- wobei in dessen zweiter Position der erste Aufnahmeraum (43) ausgebildet ist, die genannte Querstange (21) zwischen diesem ersten Aufnahmeraum (43) und einer sich außerhalb dieses ersten Aufnahmeraums (43) befindlichen Zone frei verschieben zu können,
das Betätigungselement (40) ausgebildet ist, die Verschiebung des ersten Hakens (42) von seiner ersten Position in seine zweite Position zu steuern, um so den Übergang des Kupplungsmechanismus von seiner Kupplungskonfiguration in seine Entkupplungskonfiguration zu untersagen; und bei dem die Platte des Scooters eine Führungsfläche (60) zur Führung der Querstange (21) in den genannten ersten Aufnahmeraum (43) bildet, wobei diese Führungsfläche (60) tangential zu dem genannten ersten Aufnahmeraum (43) und relativ zu diesem ersten Aufnahmeraum (43) ortsfest ist.

## Claims

1. Connecting system (0) for connecting a manually propelled wheelchair (100) to a scooter (200) provided with at least one motorised wheel (201), the system (0) comprises:
- a first fixing interface (1a) adapted to clamp an external peripheral surface of a first tubular part of the wheelchair (102a);
- a second fixing interface (1b) adapted to clamp an external peripheral surface of a second tubular part (102b) of the wheelchair;
- a detachable structure (2) provided with at least one crossbar (21);
the connecting system (0) being arranged to selectively adopt:
- a connecting configuration, wherein the detachable structure (2) is assembled to the first and second fixing interfaces (1a, 1b) to be able to transmit forces between the crossbar (21) and these first and second fixing interfaces (1a, 1b); and
- a release configuration, wherein the detachable structure (2) is detached with respect to each of said first and second fixing interfaces (1a, 1b), **characterised in that** the detachable structure (2) comprises first and second side rods (24a, 24b), the detachable structure (2) being articulated to be deformable between a deployed shape and a folded shape,
- in its deployed shape, the detachable structure (2) is U-shaped;
- in its folded shape, on the one hand, the first side rod (24a) has a longitudinal axis extending mainly to the greatest proximity of the longitudinal axis (A-A) of the crossbar than in the deployed shape of the detachable structure, and on the other hand, the second side rod (24b) has a longitudinal axis extending mainly to the greatest proximity of the longitudinal axis (A-A) of the crossbar (21) than in the deployed shape of the detachable structure.

2. Connecting system (0) according to claim 1, comprising first and second pieces of connecting equipment (22a, 22b) connected to one another via said at least one crossbar (21);
the first piece of connecting equipment (22a) being movable, by movement of a first manual control (23a), between:
- a connecting position, wherein the first piece of connecting equipment (22a) secures the detachable structure (2) on said first fixing interface (1a); and
- a release position, wherein the first piece of connecting equipment (22a) enables the spacing of the detachable structure (2) with respect to said first fixing interface (1a);
the second piece of connecting equipment (22b) being movable, by movement of a second manual control (23b) distinct from said first manual control (23a), between:
- a connecting position, wherein this second piece of connecting equipment (22b) fixes the detachable structure (2) on said second fixing interface (1b); and
- a release position, wherein the second piece of connecting equipment (22b) enables the spacing of the detachable structure (2) with respect to said second fixing interface (1b).

3. Connecting system (0) according to claim 2, wherein:
- said first piece of connecting equipment (22a) is carried by said first side rod (24a) and is arranged to adopt a fixed position with respect to this first side rod (24a), this fixed position of the first piece of connecting equipment (22a) being selected from among a plurality of predefined fixed positions of the first piece of connecting equipment (22a); and
- said second piece of connecting equipment (22b) is carried by said second side rod (24b) and is arranged to adopt a fixed position with respect to this second side rod (24b), this fixed position of the second piece of connecting equipment (22b) being selected from among a plurality of predefined fixed positions of the second piece of connecting equipment (22b).

4. Connecting system (0) according to claim 2, wherein:
- on the one hand, the first fixing interface (1a) and the first piece of connecting equipment (22a) comprise shapes which are complementary to one another, to enable an interlocking between the first fixing interface (1a) and the first piece of connecting equipment (22a) by translation of the first piece of connecting equipment (22a) with respect to the first fixing interface (1b) along a first interlocking axis (Z1-Z1); and
- on the other hand, the second fixing interface (1b) and the second piece of connecting equipment (22b) comprise shapes which are complementary to one another to enable an interlocking between the second fixing interface (1b) and the second piece of connecting equipment (22b) by translation of the second piece of connecting equipment (22b) with respect to the second fixing interface (1b) along a second interlocking axis (Z2-Z2).

5. Connecting system (0) according to claim 4, wherein:
- on the one hand, complementary shapes between the first fixing interface (1a) and the first piece of connecting equipment (22a) are arranged, such that when the first fixing interface (1a) and the first piece of connecting equipment (22a) are interlocked, they form mechanical obstacles prohibiting any translation of the first piece of connecting equipment (22a) with respect to the first fixing interface (1a) along any of the radial directions to the longitudinal axis (A-A) of the crossbar (21); and
- on the other hand, complementary shapes between the second fixing interface (1b) and the second piece of connecting equipment (22b) are arranged, such that when the second fixing interface (1b) and the second piece of connecting equipment (22b) are interlocked, they form mechanical obstacles prohibiting any translation of the second piece of connecting equipment (22b) with respect to the second fixing interface (1b) along any of the radial directions to the longitudinal axis (A-A) of the crossbar (21) .

6. Connecting system (0) according to any one of claims 2 to 5, wherein the detachable structure (2) comprises means for adjusting a spacing distance between a connecting zone of this detachable structure (2) with the first fixing interface (1a) and a connecting zone of this detachable structure (2) with the second fixing interface (1b), these adjustment means selectively adopting a blocked configuration, wherein said spacing distance is fixed and an adjustment configuration, wherein this spacing distance is variable.

7. Connecting system according to claim 6, wherein these spacing distance adjustment means comprise first and second sliders (24a1, 24b1) arranged to slide at a distance from one another along the crossbar (2).

8. Connecting system (0) according to any one of claims 2 to 7, wherein:
- said first piece of connecting equipment (22a) comprises at least one first pair of latches complementary to a first pair of lock strikes belonging to the first fixing interface (1a), the latches of this first pair of latches being resiliently stressed to an assembly position of these latches in the lock strikes of the first pair of lock strikes; and
- said second piece of connecting equipment (22b) comprises at least one second pair of latches (25b) complementary to a second pair of lock strikes (26b) belonging to the second fixing interface (1b), the latches of this second pair of latches (25b) being resiliently stressed to an assembly position of these latches in the lock strikes of the second pair of lock strikes (26b); and the connecting system (0) being in its connecting configuration, when these first and second pieces of connecting equipment (22a, 22b) are in their respective assembly positions.

9. Connecting system (0) according to claim 8, wherein:
- the first piece of connecting equipment (22a) comprises a cam (28) for moving latches of said first pair of latches to the assembly position of these latches in the lock strikes of the first pair of lock strikes; and
- the second piece of connecting equipment comprises a cam for moving the latches of said second pair of latches to the assembly position of these latches in the lock strikes of the second pair of lock strikes.

10. Connecting system (0) according to any one of claims 1 to 7, wherein the first connecting interface (1a) comprises at least one first hook (29a) which is movable between:
- a release position, wherein this first hook releases a passage to a first notch (30a) for receiving a first part of the detachable structure (2), this first notch (30a) being formed in the first fixing interface (1a); and
- a clamping position, wherein this first hook (29a) clamps said first part of the detachable structure (2) inside the first receiving notch (30a), the detachable structure (2) thus being immobilised in this first notch (30a) and wherein the first fixing interface (1a) comprises a manual actuator (31a) arranged to move said first hook (29a) between its release position and its clamping position.

11. Connecting system (0) according to any one of claims 1 to 10, comprising a coupling device (40) adapted to be assembled on a scooter (200) provided with at least one motorised wheel (201) and a plate (202), this coupling device (40) comprising a coupling mechanism which comprises a first abutment (41) and a first hook (42) which together define a first receiving space (43) between this first abutment (41) and this first hook (42), this first hook (42) being movable with respect to this first abutment (41) between a first position and a second position:
- in its first position, the first receiving space (43) being shaped to receive the crossbar (21) in this first space (43) and to prohibit the exiting of this crossbar (21) outside of this first receiving space (43) by translation of this bar in any radial direction with respect to a longitudinal axis (A-A) of this bar (21); and
- in its second position, the first receiving space (43) has an opening oriented to be able to freely move said crossbar (21) between this first receiving space (43) and an external zone (Z) to this first receiving space (43) by translation of the crossbar (21) in a radial movement direction (D1) with respect to the longitudinal axis (A-A) of the bar (21).

12. Connecting system (0) according to claim 11, wherein the coupling device (40) comprises one single surface (60) for guiding the crossbar (21) to said first receiving space (43), this only guiding surface (60) being tangent to said first receiving space (43) and fixed with respect to this first receiving space (43), this only guiding surface (60) is configured to extend parallel to said plate when the coupling device (40) is assembled on a scooter (200).

13. System according to any one of claims 11 or 12, wherein the coupling mechanism is arranged to move the first hook (42) from its first position to its second position under the effect of a thrust exerted by the crossbar (21) on an actuation surface (421) of the first hook (42), in the direction of said first receiving space (43).

14. System according to any one of claims 11 to 13, wherein said coupling mechanism comprises a second abutment (41b) and a second hook (42b) which together define a second receiving space (43b) between this second abutment (41b) and this second hook (42b), this second space (43b) being moved away from said first receiving space (43), this second hook (42b) being movable with respect to this second abutment (41b) between first and second positions of the second hook (42b) :
- in the first position of the second hook (42b), the second receiving space (43b) being shaped to receive the crossbar (21) in this second space (43b) and to prohibit the exiting of this crossbar (21) outside of this second receiving space (43b); and
- in the second position of the second hook, the second receiving space (43b) is shaped to be able to freely move said crossbar (21) between this second receiving space (43b) and an external zone (Z) to this second receiving space (43b), the coupling mechanism and the crossbar (21) are arranged, such that the crossbar (21) can be located simultaneously in the first and second spaces (43, 43b), while the first hook (42) is located in its first position, and that the second hook (42b) is located in its first position, and wherein the first and second hooks (42, 42b) are connected to one another by a connecting bar (46) such that these first and second hooks (42, 42b) move together between their first and second respective positions.

15. Vehicle (V1) for transporting a passenger comprising a manually propelled wheelchair (100) to carry this passenger and a connecting system (0) according to any one of claims 1 to 14, said first fixing interface (1a) clamping an external peripheral surface of a first tubular part (102a) of the wheelchair and said second fixing interface (1b) clamping an external peripheral surface of a second tubular part (102b) of the wheelchair, the connecting system (0) being placed in its connecting configuration, such that the detachable structure (2) is assembled to the first and second fixing interfaces (1a, 1b) to be able to transmit traction forces of the wheelchair via the crossbar (21) of the detachable structure (2).

16. Vehicle (V1) for transporting a passenger according to claim 15, further comprising:
- a scooter (200) provided with at least one motorised wheel (201) and a plate (202); and
- a coupling device (40) assembled on said scooter, this coupling device (40) comprising a coupling mechanism which is movable between a coupling configuration, wherein said crossbar (21) is coupled to the coupling device (40) and an uncoupled configuration, wherein said crossbar (21) is released with respect to the coupling device (40), the coupling device (40) comprising a manoeuvring member (44) arranged to control the passage of the coupling mechanism from its coupling configuration to its uncoupled configuration.

17. Vehicle (V1) according to claim 16, wherein the coupling mechanism comprises a first abutment (41) and a first hook (42) which together define a first receiving space (43) between this first abutment (41) and this first hook (42), this first hook (42) being movable with respect to this first abutment (41) between a first position and a second position:
- in its first position, the first receiving space (43) being shaped to receive the crossbar (21) in this first space (43) and to prohibit the exiting of this crossbar (21) outside of this first receiving space (43); and
- in its second position, the first receiving space (43) being shaped to be able to freely move said crossbar (21) between this first receiving space (43) and a zone external to this first receiving space (43),
the manoeuvring member (40) is arranged to control the movement of the first hook (42) from its first position to its second position, to thus induce the passage of the coupling mechanism from its coupling configuration to its uncoupled configuration; and wherein the plate of the scooter constitutes a guiding surface (60) of the crossbar (21) to said first receiving space (43), this guiding surface (60) being tangent to said first receiving space (43) and being fixed with respect to this first receiving space (43).
